# EUROPEAN PATENT APPLICATION

(11) **EP 4 822 004 A1**
(43) Date of publication of application: **14.10.2026**
(21) Application number: 25166039.5
(22) Date of filing: 25.03.2025
(51) Int. Cl.: C11D 1/72, B01J 13/16, B01J 13/18, B01J 13/22, C11D 1/83, C11D 1/825, C11D 3/20, C11D 3/22, C11D 3/50

(54) **LIQUID COMPOSITION WITH PERFUME CAPSULES**

(71) Applicant: The Procter & Gamble Company, Cincinnati, OH 45202 (US)
(72) Inventor: COLLU, Mattia, 1853 Strombeek-Bever (BE); LABIE, Julien Christian, 1853 Strombeek-Bever (BE); SAVEYN, Pieter Jan Maria, 1853 Strombeek-Bever (BE); SMETS, Johan, 1853 Strombeek-Bever (BE); WALRAVENS, Wouter, 1853 Strombeek-Bever (BE)
(74) Representative: P&G Patent Belgium UK

(57) **Abstract**

Liquid composition comprising:
i) from 5% to 90% by weight of the composition of a nonionic material selected from the group consisting of non-ionic surfactants, non-aqueous organic solvents, and a mixture thereof;
ii) from 1% to 50% by weight of the composition of perfume capsules, wherein the capsules have a core and a shell and wherein the shell surrounds the core;
wherein the core comprises a perfume,
wherein the shell comprises a polymeric material that is the reaction product of chitosan and a cross-linking agent system,

iii) up to 25% by weight of the composition of water; and
iv) less than 5% by weight of the composition of anionic surfactant.

## Description

### FIELD OF THE INVENTION

The present invention is in the field of liquid compositions comprising perfume capsules. It also relates to unit-dose articles comprising perfume capsules and a method of laundering using the liquid composition or the unit-dose articles of the invention.

### BACKGROUND OF THE INVENTION

It is common for laundry compositions to have perfumes. Sometimes the perfumes are encapsulated in capsules, that protect the perfume and release the perfume at different stages, including after the wash. A problem found with laundry compositions comprising perfume capsules is that the perfume can leak from the capsules, reducing the amount of perfume available for after the wash. Another negative effect can be that the perfume ingredients, can oxidize other ingredients of the laundry composition, affecting the amount of actives and even the appearance of the product. These problems can be more acute when the laundry composition is enclosed in a water-soluble unit dose article. Unit-dose articles seem to have more design constrains than other laundry detergents because they have the added level of complexity that the composition needs to be low in water and compatible with the water-soluble film. In the case of multi-compartment water-soluble articles, the migrations of ingredients from one compartment to another also needs to be considered.

Perfume capsules can be physically instable when incorporated into laundry compositions. The capsules can separate, aggregate, etc. This makes the product less appealing to the consumer.

The objective of the present invention is to provide a composition comprising perfume capsules with reduced perfume leakage from the capsules and that are stable in liquid compositions.

### SUMMARY OF THE INVENTION

According to the first aspect of the invention there is provided a liquid composition comprising perfume capsules. According to the second aspect of the invention there is provided a unit-dose article comprising the liquid composition of the invention.

According to the third aspect of the invention there is provided a method of laundering a fabric using the composition or the unit-dose article of the invention.

The elements of the composition described in relation to the first aspect of the invention apply *mutatis mutandis* to the second and third aspects of the invention.

### DETAILED DESCRIPTION OF THE INVENTION

As used herein, the articles including "the," "a" and "an" when used in a claim or in the specification, are understood to mean one or more of what is claimed or described.

As used herein, the terms "include," "includes" and "including" are meant to be non-limiting.

The term "substantially free of" or "substantially free from" as used herein refers to either the complete absence of an ingredient or a minimal amount thereof merely as impurity or unintended byproduct of another ingredient. A composition that is "substantially free" of/from a component means that the composition comprises less than about 0.5%, 0.25%, 0.1%, 0.05%, or 0.01%, or even 0%, by weight of the composition, of the component.

All percentages, ratios and proportions used herein are by weight percent of the composition, unless otherwise specified. All average values are calculated "by weight" of the composition, unless otherwise expressly indicated.

All measurements are performed at 25°C unless otherwise specified.

Unless otherwise noted, all component or composition levels are in reference to the active portion of that component or composition, and are exclusive of impurities, for example, residual solvents or by-products, which may be present in commercially available sources of such components or compositions.

### Liquid composition

The present invention encompasses a liquid composition. The composition comprises:
i) from 5% to 90% by weight of the composition of a nonionic material selected from the group consisting of non-ionic surfactants, non-aqueous organic solvents, and mixtures thereof;
ii) from 1% to 50% by weight of the composition of perfume capsules, wherein the capsules have a core and a shell and wherein the shell surrounds the core;
   wherein the core comprises a perfume,
   wherein the shell comprises a polymeric material that is the reaction product of chitosan and a cross-linking agent system,
iii) up to 25% by weight of the composition of water, preferably from 1% to 25% by weight of the composition of water; and
iv) less than 5%, preferably less than 3%, more preferably less than 1% by weight of the composition of anionic surfactant and especially substantially free or free of anionic surfactant.

The nonionic material, non-aqueous organic solvent material, perfume capsule material and anionic surfactant are described in further detail herein below.

The liquid composition comprises from 5% to 90%, preferably from 10% to 90%, preferably from 20% to 90%, more preferably from 30% to 90%, most preferably from 50% to 90% by weight of the composition of a nonionic material selected from the group consisting of non-ionic surfactants, non-aqueous organic solvents, and mixtures thereof. The nonionic material has been found to reduce perfume leakage from perfume capsules. The liquid composition may comprise non-ionic surfactants. The liquid composition may comprise non-aqueous solvent, preferably selected from the group consisting of glycerol, polyglycerol, alkoxylated polyol or alkoxylated polyol ester solvents, and a mixture thereof. Additional non-aqueous solvents can be added to the liquid composition. Additional non-aqueous solvents include propylene glycol, dipropylene glycol, tripropyleneglycol, sorbitol, polyethyleneglyceol, or a mixture thereof. Preferably the liquid composition comprises less than 5%, preferably less than 3%, more preferably less than 1% of additional non-aqueous solvent, more preferably the liquid composition is substantially free or free of additional non-aqueous solvents selected from the group consisting of propylene glycol, dipropylene glycol, tripropyleneglycol, sorbitol, polyethyleneglycol, and a mixture thereof. While such solvents may be preferential in view of optimizing film plasticization properties, they can inhibit the perfume leakage protection benefit provided by the alcohol alkoxylated nonionic surfactant according to the invention. Preferably, the composition is substantially free or free of propylene glycol.

The composition may comprise glycerol. The composition may be substantially free or free of polyethylene glycol having a number average molecular weight of from 200 Da to 1000 Da. The composition may comprise glycerol and polyethylene glycol having a number average molecular weight of from 200 Da to 1000 Da, preferably the glycerol and polyethylene glycol having a number average molecular weight of from 200 Da to 1000 Da are in a weight ratio of at least 1.5:1, preferably at least 2:1.

The liquid composition of the invention may comprise an ethylene oxide - propylene oxide triblock copolymer having one of the following structures:
a) an ethylene oxide-propylene oxide-ethylene oxide (EO/PO/EO) triblock copolymer, wherein the copolymer comprises a first EO block, a second EO block and PO block and wherein the first EO block and the second EO block are linked to the PO block;
b) a propylene oxide-ethylene oxide-propylene oxide (PO/EO/PO) triblock copolymer, wherein the copolymer comprises a first PO block, a second PO block and EO block and wherein the first PO block and the second PO block are linked to the EO block.

The liquid composition of the invention may comprise an alcohol alkoxylated nonionic surfactant and an ethylene oxide - propylene oxide triblock copolymer.

The liquid composition of the invention may comprise polypropylene glycol having a number average molecular weight of from 700Da to 5000Da, preferably from 700Da to 4000Da, preferably from 700Da to 2500Da.

The liquid composition of the invention may comprise a non-aqueous solvent selected from the group consisting of polyglycerol, alkoxylated polyol or alkoxylated polyol ester solvents, and a mixture thereof; an ethylene oxide - propylene oxide triblock copolymer; glycerol and/or polypropylene glycol having a number average molecular weight of from 700Da to 5000Da.

The liquid composition comprises from 1% to 50%, preferably from 1% to 30%, more preferably from 3% to 10% by weight of the liquid composition of perfume capsules.

The liquid composition comprises up to 25% by weight of the liquid composition of water, preferably from 1% to less than 25%, preferably less than 20%, more preferably from 5% to 15% by weight of the liquid composition of water.

As stated before, the liquid composition comprises less than 5%, preferably less than 3%, more preferably less than 1% by weight of the liquid composition, most preferably is substantially free or free of anionic surfactant. Without wishing to be bound by theory it is believed that presence of anionic surfactant compromises the leakage prevention benefit provided by the nonionic material of the composition of the invention.

### Nonionic surfactant

For the purpose of this disclosure, the average degree of ethoxylation refers to the weight average and the average degree of branching refers to the number average.

Suitable nonionic surfactant for use herein includes alcohol alkoxylated nonionic surfactant selected from the group consisting of linear alcohol alkoxylated nonionic surfactant, branched alkoxylated primary alcohol nonionic surfactant, alkoxylated secondary alcohol nonionic surfactant, ethylene oxide - propylene oxide triblock copolymer, and a mixture thereof.

### Alcohol alkoxylated nonionic surfactant

Suitable alcohol alkoxylated nonionic surfactants can have the formula RO-(AO)nH, wherein: R is a primary or secondary C₄ to C₁₈, preferably a C₆ to C₁₆, more preferably a C₆ to C₁₄ branched and/or linear alkyl chain; AO is an ethoxy or propoxy or butoxy unit, or mixtures thereof, and wherein n is on average from 1 to 30, preferably from 3 to 15, more preferably from 5 to 12, even more preferably from 6 to 10. Preferred R chains for use herein are the C₆ to C₁₆ linear or branched alkyl chains, preferably branched alkyl chains. Preferred AO groups are ethoxy groups. n is the average degree of alkoxylation and is preferably between 6 and 10. Most preferably R is a branched C6 to C16 alkyl chain comprising on average between 6 and 10 ethoxy groups. Alternatively, R is a branched C6 to C16 alkyl chain comprising on average between 6 and 10 alkoxy groups selected from ethoxy groups, propoxy groups, and a mixture thereof. The AO distribution can be a broad or a narrow (also called peaked) AO distribution. When mixed alkoxy group, they could be randomly ordered or blocked, preferably blocked.

Suitable branched alkoxylated alcohols may be selected from the group consisting of: C₆-C₁₆ alkyl branched alkoxylated alcohols, and mixtures thereof. The branched alkoxylated alcohols can be derived from the alkoxylation of C₆-C₁₆ alkyl branched alcohols selected form the group consisting of C₆-C₁₆ primary mono-alcohols having one or more C₁-C₄ branching groups, or C₆-C₁₆ secondary alcohols.

### Branched primary alcohol alkoxylates

By C₆-C₁₆ primary mono-alcohol, it is meant that the main chain of the primary mono-alcohol has a total of from 6 to 16 carbon atoms. The C₆-C₁₆ primary mono-alcohol can be selected from the group consisting of: ethyl hexanol, propyl hexanol, dimethyl hexanol, trimethyl hexanol, methyl heptanol, ethyl heptanol, propyl heptanol, dimethyl heptanol, trimethyl heptanol, methyl octanol, ethyl octanol, propyl octanol, butyl octanol, dimethyl octanol, trimethyl octanol, methyl nonanol, ethyl nonanol, propyl nonanol, butyl nonanol, dimethyl nonanol, trimethyl nonanol, methyl decanol, ethyl decanol, propyl decanol, butyl decanol, dimethyl decanol, trimethyl decanol, methyl undecanol, ethyl undecanol, propyl undecanol, butyl undecanol, dimethyl undecanol, trimethyl undecanol, methyl dodecanol, ethyl dodecanol, propyl dodecanol, butyl dodecanol, dimethyl dodecanol, trimethyl dodecanol, and mixtures thereof.

The C₆-C₁₆ primary mono-alcohols can be selected from the group consisting of ethyl hexanol, propyl hexanol, ethyl heptanol, propyl heptanol, ethyl octanol, propyl octanol, butyl octanol, ethyl nonanol, propyl nonanol, butyl nonanol, and mixtures thereof.

Preferably the C₄-C₁₀ primary mono-alcohol is selected from the group consisting of ethyl hexanol, propyl hexanol, ethyl heptanol, propyl heptanol, and mixtures thereof.

In the primary branched alkoxylated alcohol, the C₁-C₄ branching group can be preferably substituted into the C₆-C₁₆ primary mono-alcohol at the C2 position, as measured from the hydroxyl group of the starting alcohol. Optionally there can be further branching groups present further down the alkyl chain.

Especially preferred branched primary mono-alcohols are guerbet mono-alcohols. The C₆-C₁₆ primary mono-alcohol is most preferably ethyl hexanol, and propyl heptanol.

The branched alkoxylated alcohol can comprise on average from 1 to 30, preferably from 2 to 15, more preferably from 3 to 12 even more preferably from 4 to 9 ethoxylate units, and optionally from 1 to 9, preferably from 2 to 7, more preferably from 3 to 6 of propoxylate units.

The branched alkoxylated alcohol is preferably 2-ethyl hexan-1-ol, such as guerbet 2-ethyl hexan-1-ol, ethoxylated to an average degree of from 4 to 6, and propoxylated to an average degree of from 4 to 6, more preferably, the alcohol is first propoxylated and then ethoxylated. Another preferred branched alkoxylated alcohols are 2-alkyl-1-alkanols such as alkoxylated C₁₀ guerbet alcohols with on average 1 to 14, preferably from 4 to 12, more preferably from 6 to 10 ethoxylate or ethoxylate-propoxylate units, preferably wherein the alcohol is first propoxylated and then ethoxylated.

Non-limiting examples of suitable branched alkoxylated alcohols are, for instance, Ecosurf^{®} EH3, EH6, and EH9 ethoxylated guerbet alcohols, commercially available from DOW, and Lutensol^{®} XP alkoxylated Guerbet alcohols & Lutensol^{®} XL ethoxylated Guerbet alcohols available from BASF.

### Linear / linear-branched primary alcohol alkoxylates

The alkoxylated alcohol nonionic surfactant may also be a primary linear alkoxylated alcohol nonionic surfactant or a mixture of linear and branched alkoxylated alcohol nonionic surfactant. Linear or mixed linear/branched alcohol alkoxylated nonionic surfactants preferred herein are alkoxylated nonionic surfactants with a C₈ to C₁₈, preferably a C₈ to C₁₆, more preferably a C₁₀ to C₁₅, most preferably of C₁₂ to C₁₅ linear or mixed linear/branched alkyl chain comprising on average from 1 to 30, preferably from 3 to 15, more preferably from 5 to 12, even more preferably from 6 to 10 ethoxylate units.

Non-limiting examples of suitable linear or mixed linear/branched primary alkoxylated nonionic surfactants for use herein are Dobanol^{®} 91-2.5 (R is a mixture of C₉ and C₁₁ alkyl chains, n is on average 2.5), Dobanol^{®} 91-5 (R is a mixture of C₉ to C₁₁ alkyl chains, n is on average 5); Dobanol^{®} 91-10 (R is a mixture of C₉ to C₁₁ alkyl chains, n is on average 10); Greenbentine DE60 (R is a C10 linear alkyl chain, n is on average 6); Marlipal 10-8 (R is a C₁₀ linear alkyl chain, n is on average 8); Neodol 91-8 (R is a mixture of C₉ to C₁₁ alkyl chains, n is on average 8); Empilan^{®} KBE21 (R is a mixture of C₁₂ and C ₁₄ alkyl chains, n is on average 21); Lutensol ON30 (R is C₁₀ linear alkyl chain, n is on average 3); Lutensol ON50 (R is C₁₀ linear alkyl chain, n is on average 5); Lutensol ON70 (R is C₁₀ linear alkyl chain, n is on average 7); Novel 610-3.5 (R is mixture of C₆ to C₁₀ linear alkyl chains, n is on average 3.5); Novel 810FD-5 (R is mixture of C₈ to C₁₀ linear alkyl chains, n is on average 5); Novel 10-4 (R is C₁₀ linear alkyl chain, n is on average 4); Novel 1412-3 (R is mixture of C₁₂ to C₁₄ linear alkyl chains, n is on average 3); Lialeth^{®} 11-5 (R is a C₁₁ linear alkyl chain, n is on average 5); Lialeth^{®} 11-21 (R is a mixture of linear and branched C₁₁ alkyl chain, n is on average 21), Tomadol 25-7 (R is a mixture of C₁₂ to C₁₅ alkyl chains, n is on average 7), or mixtures thereof.

### Secondary branched alcohol alkoxylates

Alternatively the branched alkoxylated alcohol can be a secondary branched alkoxylated alcohol, having the branching on the C1 position, as measured from the hydroxyl group of the starting alcohol. The alkoxylated nonionic surfactant may be a secondary alcohol ethoxylate such as for example the Tergitol^{™}-15-S surfactants having the general formula shown below and commercially available from DOW. 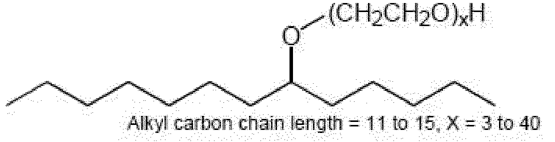 Tergitol 15-S surfactants

### Preferred secondary alcohol ethoxylate surfactants have on average 3-9 EO units.

Another suitable alkoxylated nonionic surfactant is an alkyl ethoxy alkoxy alcohol, preferably wherein the alkoxy part of the molecule is propoxy, or butoxy, or propoxy-butoxy. More preferred alkyl ethoxy alkoxy alcohols are of formula (II): 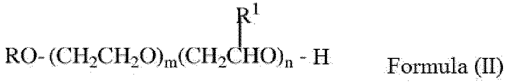 wherein:
R is a branched or unbranched alkyl group having 8 to 16 carbon atoms;
R¹ is a branched or unbranched alkyl group having 1 to 5 carbon atoms;
n is on average from 1 to 10; and m is on average from 6 to 35.
R is preferably from 12 to 15, preferably 13 carbon atoms. R¹ is preferably a branched alkyl group having from 1 to 2 carbon atoms. n is preferably 1 to 5. m is preferably from 8 to 25. Preferably, the weight average molecular weight of the ethoxylated alkoxylated nonionic surfactant of formula (II) is from 500 to 2000g/mol, more preferably from 600 to 1700 g/mol, most preferably 800 to 1500 g/mol. Preferably the ethoxy and alkoxy groups are arranged in blocks, more preferably the ethoxy group is bound first to the starting alcohol material, followed by the alkoxy group being further bound to the ethoxy group, as shown in Formula II above.

Suitable examples of primary and secondary linear and branched ethoxylated alkoxylated nonionic surfactants are described in Chapter 7 of Surfactant Science and Technology, Third Edition, Wiley Press, ISBN 978-0-471-68024-6.

Most preferably the alkoxylated alcohol nonionic surfactant is selected from the group consisting of: 2-propylheptyl EO8 (Lutensol XL89-BASF); 2-propylheptyl EO5 (Lutensol XL50-BASF); C₁₀ alcohol EO5 (Lutensol ON 50-BASF); C₁₀ -alcohol EO7 (Lutensol ON 70-BASF); C₈-C₁₀ EO5 (Novel 810 FD5 Sasol); C₁₀ EO4 (Novel 10-4 Sasol); Tergitol 15-S-3; Tergitol 15-S-5; Tergitol 15-S-7; and Ethyl hexanol PO5EO6 (Ecosurf EH6-Dow). The number behind the alkoxy e.g. ethoxy (EO) group represents the average number of alkoxy groups present.

The presence of alcohol alkoxylated nonionic surfactant further boost the cleaning performance of the liquid composition while contributing to the leakage prevention without negatively impacting the interaction of the liquid composition with a water-soluble film.

### Non-aqueous solvent

The liquid composition might comprise from 5% to 90%, preferably from 30% to 90%, more preferably from 40% to 90% by weight of the liquid composition of a non-aqueous solvent comprising a solvent selected from the group consisting of glycerol, alkoxylated polyol, alkoxylated polyol ester, polyglycerol, and a mixture thereof.

### Alkoxylated polyol and alkoxylated polyol esters

The alkoxylated polyol has a polyol core with three to five -OH groups, wherein at least one of the -OH groups is modified to form a polyalkylene oxide branch.

The alkoxylated polyols are based on polyols that have three to five -OH groups in total. The polyol core used to prepare the alkoxylated polyols may be a monomer or may be oligo- or polymer build up by an assembly process comprising -OH groups containing subunits. Also, in case the polyol core is based on an oligomer or polymer the total number of -OH groups is three to five, too. This means that the average number of -OH groups in the inventive compound is not restricted to only three, four and five but can also be every decimal number between three and five.

For example, diglycerol possesses four -OH groups and triglycerol possesses five -OH groups. The skilled person understands that a polyglycerol (n = 2 to 3) mixture of diglycerol and triglycerol can be prepared, wherein the (population of) polyol has a total number of -OH groups that lies between three and five. Depending on the ratio of diglycerol and the ratio of triglycerol any decimal number between four and five can be adjusted.

Thus, the alkoxylated polyols of the invention may be a homomeric or heteromeric group of molecules based on polyols that have three to five -OH groups. Preferably, the alkoxylated polyols is based on a polyol having three -OH groups.

The term "-OH group", as used herein, refers to hydroxyl groups, in particular alcohol groups. The term includes all alcohol groups independent of the status of its carbon atom. Thus, in the sense of the present invention primary, secondary as well as tertiary alcohols fall within the meaning of "-OH group". Preferably, the alkoxylated polyol has a linear backbone of carbon atoms. Not included within the scope of the term "-OH group" are -OH groups that are part of carboxylic acids.

The polyol reacted with alkylene oxide does not comprise further functional groups (such as amines, esters, carbonyl, carbonic acids, phosphate, sulfonate groups etc. and derivatives thereof) besides the -OH groups.

At least one of the -OH groups (of the polyol core) is modified to form an alkylene oxide branch, wherein the alkoxylated polyol comprises polyethylene oxide branches comprising on average at least three polyethylene oxide units, preferably, polyethylene oxide branches comprising on average 3 to 10 ethylene oxide units. More detailed embodiments describing the different chain lengths are provided below.

It is noted that all such numbers are numbers "on average" meaning that such numbers refer to the average number for such unit per -OH group calculated based on all -OH groups of an alkoxylated polyol.

The reactions leading to the alkoxylated polyols, are statistical reactions, meaning there is never just one chemically exactly defined compound present, but an alkoxylated polyol always is a mixture of slightly deviating structures, all stemming from the same reaction within one reaction space.

Therefore, unless otherwise indicated, the values, ranges and ratios given in the specification for the number of -OH groups and the molecular weight (Mn) relate to the number average values in heterogenic mixture of the synthesized alkoxylated polyols containing individual, slightly from each other deviating chemical structures that result from the preparation method of the present invention. As known in polymer science, the weight-average molecular weight (Mw) is then a measure for the (in)homogeneity within the mixture of different species in "the alkoxylated polyols".

The polyol may comprise impurities or other types of polyols in an amount up to not more than 10% w/w, not more than 7% w/w, not more than 5% w/w, not more than 3% w/w, not more than 2% w/w, not more than 1% w/w, not more than 0.5% w/w or not more than 0.1% w/w.

The polyol core preferably is a monomer, oligomer or polymer, wherein each of the oligomer and the polymer comprise a plurality of subunits, preferably the oligomer is a homooligomer or the polymer is a heteropolymer. Preferably, the polyol core is a monomer. Preferably, the polyol core is selected from the group consisting of glycerol, meso-Erythritol, D-threitol, L-threitol, 1,2,5,6-hexanetetrol, pentaerythritol, xylitol, ribitol, arabitol, pentitol, diglycerol, triglycerol, and polyglycerol and wherein the polyglycerol preferably consists of two to three subunits of glycerol. More preferably, the polyol core is glycerol.

The alkoxylated polyol comprises alkylene oxide branches comprising on average at least at least 3 polyethylene oxide units (EOs), preferably at least 5 EOs, more preferably at least 10 EOs. In even more preferred embodiments, the alkylene oxide branches comprise on average 3 to 30 EOs, more preferably from 5 to 25 and especially from 10 to 20 EO.

In preferred embodiments, one alkylene oxide branch has an average weight ranging from 80 to 450 g/mol, preferable from 100 to 300 g/mol.

The alkoxylated polyol can comprise alkylene oxide branches comprising on average not more than 10 polypropylene oxide (POs) units, preferably not more than 5 POs and more preferably not more than 2 POs. In even more preferred embodiments, the alkylene oxide branches essentially consist of ethylene oxide units.

The term "average number of EOs per alkylene oxide branch", as used herein, refers to the calculated number of EO units that should be present in one alkylene oxide branch. As explained in more detail above, the skilled person is well-aware of the fact that the synthesis of the inventive compounds will result in a mixture of slightly deviating compounds underlying a statistical distribution. Thus, the "average number of EOs per alkylene oxide branch" is calculated by dividing the total amount of employed mol EO per mol of polyol by the (average) number of -OH groups of the polyol (or the mixture of polyols).

The term "average number of ether linkages in the polyol core", as used herein, refers to the calculated number of ether bonds that are present in one polyol molecule. As the polyol may be a mixture of deviating compounds, the "average number" may refer to the arithmetic average derived from the polyols of the mixture. For example, diglycerol has 1 ether linkage, triglycerol has 2 ether linkages. Polyglycerol with 50% diglycerol and 50% triglycerol has on average 1.5 ether linkages.

The term "average number of -OH groups in the polyol core", as used herein, refers to the calculated number of -OH groups that should be present in one polyol molecule. As the polyol may be a mixture of deviating compounds, the "average number" may refer to the arithmetic average derived from the polyols of the mixture.

Preferably, the weight average molecular weight (Mw) of the alkoxylated polyol is in the range of from 400 to 1500 g/mol, preferable from 450 to 1300 g/mol, and more preferably from 500 to 1000 g/mol.

Preferably, the alkoxylated polyol is ethoxylated glycerol with on average 10 to 20 EO units per polyalkylene oxide branch. Commercial examples inlcude Glicerodac 7,5 (Sasol), Glicerodac 15 (Sasol), Glicerodac 20 (Sasol), Glicerodac 40 (Sasol), UCON^{™} Lubricant TPEG 500 (Dow), UCON^{™} Lubricant TPEG 900 (Dow).

The person skilled in the art knows how to determine/measure the respective weight average molecular weight (MW). This can be done, for example, by size exclusion chromatography (such as GPC, e.g., in combination with light scattering). Preferably, MW values are determined by the method as follows: OECD TG 118 (1996), which means in detail OECD (1996), Test No. 118: Determination of the Number-Average Molecular Weight and the Molecular Weight Distribution of Polymers using Gel Permeation Chromatography, OECD Guidelines for the Testing of Chemicals, Section 1, OECD Publishing, Paris, also available on the internet, for example, under https://doi.org/10.1787/9789264069848-en.

Molecular weights of the polyol starting materials may be determined as described above. Molecular weights of the alkoxylated polyol may be determined by gel permeation chromatography (GPC). The samples were prepared as follows: approx. 15 mg sample was dissolved in 10 ml eluent (THF + 0.035 mol/L Diethanolamine) for 1 hour at a temperature of 50°C. All sample solutions were filtered by a Chromafil Xtra PTFE (0,20 µm filtered prior to injection). Sealed sample vials were placed into the auto sampler. An Agilent 1200 HPLC system, consisting of an isocratic pump, vacuum degasser, auto sampler and a column oven was used. Furthermore, the Agilent system contains a Differential Refractive Index (DRI) and a variable Ultra Violet (UVW) Detector for detection. Data acquisition and data processing of conventionally SEC data was done by WinGPC Unichrom, build 6999, of PSS (Polymer Standard Services now part of Agilent). A combination of a SDV guard (7,5 x 50 mm) column and 3 SDV columns (1000A, 100000A and 1000000A, all 7,5 x 300 mm) of PSS were put in series at 60°C. THF + 0.035 mol/L Diethanolamine was used as eluent at a flow rate of 1 mL/min. 100µL of each sample solution was injected. The calibration was obtained by narrow molar mass distributed Polyethyleneoxide standards (Agilent) having a molar mass range of M= 160 till M = 1.378.000 g/mol. Molar masses outside this range were extrapolated.

"Mw" is the weight average molecular weight and "Mn" is number average molecular weight. The respective values of Mw and/or Mn can be determined as described within the experimental section below.

The molar mass distribution Mw/Mn obtained by GPC is equal to the polydispersity index (PDI), the PDI being without unit [g/mol / g/mol]).

The skilled person will understand that the polyols may also be alkoxylated with other AOs than polyethylene oxide. In this context, propylene oxide and butylene oxide are mentioned. Further, the skilled person is also well-aware of helpful modifications of the alkoxy chain, such as modifications with lactones or hydroxy carbon acid as described in WO2021165468 A.

It is noted that the alkylene oxide used to prepare the alkoxylated polyols may be derived from a fossil or non-fossil carbon source or even a mixture of the before mentioned. Preferably, the amount of non-fossil carbon atoms in the alkoxy side chains is at least 10%, at least 20%, at least 40%, at least 70%, at least 95% or it solely comprises non-fossil derived carbon atoms. The skilled person is well-aware of commercial alkylene oxide products made of non-fossil carbon sources (these products are often sold as being sustainable, renewable or bio-based). For example, Croda International, Snaith, UK, sells ethylene oxide and related products based on bio-ethanol as ECO Range. Additionally, methods to prepare bio-based propylene oxide are also known (see Abraham, D. S., "Production of propylene oxide from propylene glycol" Master's Thesis University of Missouri-Columbia (2007) (75 pages)).

It is noted that in preferred embodiments, the polyol core at least comprises two "terminal" primary alcohol groups.

The non-aqueous solvent may also comprise an alkoxylated polyol ester, preferably an alkoxylated glycerol ester, more preferably an ethoxylated glycerol ester. Such alkoxylated polyol ester maybe formulated on top of or in combination with the alkoxylated polyols or polyglycerols described herein. These include esters obtained through the reaction of above described alkoxylated polyols with carboxylic acids / fatty acids.

### Polyglycerols:

The non-aqueous solvent may comprise a polyglycerol. The polyglycerol comprises from 2 to 12 glycerol units, preferably from 2 to 5 glycerol units, more preferably the polyglycerol comprises a diglycerol, a triglycerol or a mixture thereof, most preferably diglycerol. Such polyglycerols can be formulated instead of or in combination with the alkoxylated polyols, including alkoxylated polyglycerols, or alkoxylated polyol esters described herein.

Polyglycerols have been known since the beginning of the 20th century. Polyglycerol is a polyol consisting of two or more molecules of glycerol bounded by an ether linkage. Typically, polyglycerols contain several oligomers with a wide distribution. For example, Polyglycerol-2 can contain 30 to 40 wt.% diglycerol and up to 40 wt.% glycerol, the remainder consisting of higher oligomers. However, also high purity polyglycerols can be obtained by reacting glycerol (synthetic or natural origin) and epichlorohydrin, followed by hydrolysis, neutralization and purification. Following this process the acyclic isomers are well defined with a high level of α,α'-diglycerol.

Examples of polyglycerol compounds according to the invention are selected from the group consisting of Diglycerol, Polyglycerol-3, Polyglycerol-4, Polyglycerol-5, Polyglycerol-6, Polyglycerol-7, Polyglycerol-8, Polyglycerol-9, Polyglycerol-10, Polyglycerol-11, Polyglycerol-12, and mixtures thereof.

The polyglycerols may be hyperbranched or dendritic polyglycerols such as Polyglycerin 10, i.e. polyglycerol with a large number of branches (preferably at least 7 polyether branches) in the molecule. Their synthesis is inter alia described by Haag et al. in JACS 2000, 122, 2954-2955 and Stumbé et al., Poly.Mat.Sci.Eng.2001, 84, 1023 - 1024. Their molecular weight is preferably in the range of 1000 to 30000 g/mol. The molecular weight distribution is preferably narrow, that is the apparent polydispersity Mw/Mn is usually below 1.5 (determined by size exclusion chromatography vs. polypropylene oxide standards). Suitable hyperbranched polyglycerols are available from Hyperpolymers GmbH, D79104 Germany.

As stated in the alkoxylated polyol section, optionally, the polyglycerol of the composition of the invention is alkoxylated. Preferred alkoxylated polyglycerols are compounds obtained by reaction with ethylene oxide in a matter known to the skilled in the art. Preferred polyglycerols have an average ethoxylation degree from 2 to 12, preferably from 0.5 to 10, more preferably from 1 to 5 per hydroxyl group.

According to the invention, the liquid composition may contain mixtures of alkoxylated (preferably ethoxylated) and non-alkoxylated (non-ethoxylated) polyglycerol, the weight ratio of non-ethoxylated polyglycerol to ethoxylated polyglycerol being in the range of 10:1 to 1:10, preferably from 5:1 to 1:5, more preferably from 3:1 to 1:1.

According to the invention, the liquid composition may contain mixtures of alkoxylated (preferably ethoxylated) polyols and non-alkoxylated (non-ethoxylated) polyglycerol, the weight ratio of non-ethoxylated polyglycerol to ethoxylated polyol being in the range of 10:1 to 1:10, preferably from 5:1 to 1:5, more preferably from 3:1 to 1:3.

### Polypropyleneglycol

Polypropyleneglycol is also often referred to as polypropylene oxide, the polymerization product of propylene glycol. The polypropyleneglycol has a number average molecular weight of from 700 Da to 5000 Da, preferably from 700 Da to 3000 Da, more preferably from 700 Da to 2500 Da. The molecular weight can be determined by any suitable means, such as described in Polymer Letters, v.4, pp.837-841 (1966), or J. Polym. Sci: Part A, v.1, pp.1041-1048 (1963). The polypropyleneglycol comprises, preferably consists of poly-1,2-propyleneglycol.

Polypropylene glycol can be produced through the ring-opening polymerization of propylene oxide. Suitable initiators include an alcohol with a base, such as potassium hydroxide, as a catalyst. When the initiator is ethylene glycol or water the polymer is linear. With a multifunctional initiator such as glycerine, pentaerythritol or sorbitol, the resultant polymer is branched. Linear polypropyleneglycol, especially linear poly-1,2-propyleneglycol is most preferred. Poly-1,2-propyleneglycol of the desired molecular weight is commercially available from the Dow company under the Polyglycol P tradename. Alternatively poly-1,2-propyleneglycol of the desired molecular weight can be ordered from Sigma Aldrich.

### Ethylene oxide - propylene oxide triblock copolymer

The ethylene oxide - propylene oxide triblock copolymer has one of the following structures:
a) an ethylene oxide-propylene oxide-ethylene oxide (EO/PO/EO) triblock copolymer, wherein the copolymer comprises a first EO block, a second EO block and PO block and wherein the first EO block and the second EO block are linked to the PO block (I);
b) a propylene oxide-ethylene oxide-propylene oxide (PO/EO/PO) triblock copolymer, wherein the copolymer comprises a first PO block, a second PO block and EO block and wherein the first PO block and the second PO block are linked to the EO block (II)

In other words, for the ethylene oxide-propylene oxide-ethylene oxide (EO/PO/EO) triblock copolymer the PO block is positioned between the two EO blocks. The copolymer may consist of a first EO block, a second EO block and PO block wherein the first EO block and the second EO block are linked to the PO block. By 'linked to the PO block', we herein mean the EO-PO-EO blocks have the following structure (I); 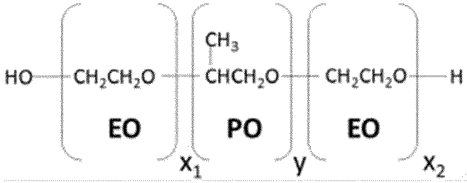 wherein X1 is preferably on average between 1 and 60, preferably between 1 and 50 more preferably between 2 and 40, even more preferably between 3 and 30, most preferably between 5 and 25;
X2 is preferably on average between 1 and 60, preferably between 1 and 50 more preferably between 2 and 40, even more preferably between 3 and 30, most preferably between 5 and 25;
Y is preferably on average between 5 and 80, preferably between 6 and 70, more preferably between 7 and 60, even more preferably between 8 and 55, most preferably between 10 and 50.

Most preferably the ethylene oxide - propylene oxide triblock copolymer according to formula I has on average an X1 value of from 5 to 25, a y value of from 10 to 50 and an X2 value of from 5 to 25.

In the case of the propylene oxide-ethylene oxide-propylene oxide (PO/EO/PO) triblock copolymer the EO block is positioned between the two PO blocks. The copolymer may consist of a first PO block, a second PO block and EO block wherein the first PO block and the second PO block are linked to the EO block.

By 'linked to the PO block', we herein mean that the PO-EO-PO blocks have the following structure HO-(PO)y2 (EO)x3 (PO)y3-H (II);
wherein y2 is preferably on average between 2 and 60, preferably between 3 and 50 more preferably between 4 and 40, even more preferably between 5 and 30, most preferably between 10 and 25;
y3 is preferably on average between 2 and 60, preferably between 3 and 50 more preferably between 4 and 40, even more preferably between 5 and 30, most preferably between 10 and 25; x3 is preferably on average between 3 and 70, preferably between 5 and 60, more preferably between 7 and 50, even more preferably between 8 and 40, most preferably between 10 and 30. Most preferably the ethylene oxide - propylene oxide triblock copolymer according to formula II has on average a y2 value of from 10 to 25, an x3 value of from 10 to 30 and a y3 value of from 10 to 25.

The ethylene oxide - propylene oxide triblock copolymer of Formula I and Formula II have a cloud point lower than 50°C, preferably lower than 40°C.

Preferably, the ethylene oxide-propylene oxide triblock copolymers of Formula I and Formula II have a weight average molecular weight of between 1000 and 10,000 Daltons, preferably between 1200 and 8000 Daltons, more preferably between 1500 and 7000 Daltons, even more preferably between 1750 and 5000 Daltons, most preferably between 2000 and 4000 Daltons. Preferred triblock copolymers of formula I include EO1-PO15-EO1, EO6-PO21-EO6, EO13-PO30-EO13, EO8-PO47-EO8 and EO21-PO47-EO21. Preferred triblock copolymers of formula II include PO21-EO14-PO21 and PO14-EO24-PO14.

Preferably, the ethylene oxide - propylene oxide triblock copolymer of formula I comprises on average between 10% and 90%, preferably between 20% and 70%, most preferably between 30% and 50% by weight of the copolymer of the combined ethylene-oxide blocks. Most preferably the total ethylene oxide content is split over the two ethylene oxide blocks such that each ethylene oxide block comprises on average between 40% and 60% preferably between 45% and 55%, even more preferably between 48% and 52%, most preferably 50% of the total number of ethylene oxide units, wherein the percentage of both ethylene oxide blocks accounts for 100% of the ethylene oxide units present.

Preferably, the ethylene oxide - propylene oxide triblock copolymer of formula II comprises on average between 10% and 90%, preferably between 30% and 85%, most preferably between 50% and 80% by weight of the copolymer of the combined propylene-oxide blocks. Most preferably the total propylene oxide content is split over the two propylene oxide blocks such that each propylene oxide block comprises on average between 40% and 60% preferably between 45% and 55%, even more preferably between 48% and 52%, most preferably 50% of the total number of propylene oxide units, wherein the percentage of both propylene oxide blocks accounts for 100% of the propylene oxide units present.

Suitable ethylene oxide-propylene oxide triblock copolymers are commercially available under the Pluronic PE and Pluronic RPE series from the BASF company, or under the Tergitol L series from the Dow Chemical Company. Particularly suitable materials are Pluronic PE 3100, Pluronic PE 4300, Pluronic PE 6400, Pluronic PE 9200, Pluronic PE 9400, Tergitol L81, Tergitol L62, Tergitol L61, Pluronic RPE 1740, Pluronic RPE 3110 and Pluronic RPE 2520.

### Perfume capsules

The perfume capsules have a core surrounded by a shell. As used herein, "shell" and "wall" are used interchangeably with regard to the perfume capsules, unless indicated otherwise. The core comprise perfume and optionally a partitioning modifier (e.g., isopropyl myristate).

The shell of the capsules comprises a polymeric material that is the reaction product of chitosan and a cross-linking agent system. The shell may be derived from isocyanates and chitosan.

The core material comprises a perfume. The shell comprises a polymer. More particularly, the invention discloses a composition comprising a population of core-shell encapsulates (capsules), the core comprising a perfume. The shell is a polymeric material comprising the reaction product of a cross-linking agent system preferably derived from an oil phase, and chitosan preferably derived from a water phase. The cross-linking agent system comprises a single or a mixture of two or more cross-linking agents. Preferred cross-linking agents are di- and/or poly-isocyanates, the di- and/or poly-isocyanates each containing an aromatic moiety. More preferably, the cross-linking agent system comprises a mixture of two or more cross-linking agents. It has been found that leakage can be controlled as a function of two isocyanates, each comprising at least one aromatic moiety, which when combined with chitosan yield a low leakage capsule in different matrices and carriers, to an extent heretofore unachieved with degradable constructs. More particularly the cross-linking agent system may comprise an isocyanate component, wherein the isocyanate component comprises a mixture of two or more di- and/or poly-isocyanates, derived from an oil phase, the di- and/or poly-isocyanates each comprising an aromatic moiety; and each isocyanate is independently selected from the group consisting of an alpha-aromatic isocyanate and a beta-aromatic isocyanate. The mixture of di- and/or poly-isocyanates may comprise at least one alpha-aromatic isocyanate and at least one beta-aromatic isocyanate.

Enhanced performance in terms of lower leakage and retention of core material in carrier material is surprisingly obtainable wherein the weighted %NCO groups of the aromatic isocyanate of the isocyanate component is from 15 to 32% or even from 20 to 26%, or even from 20 to 25% by weight, or even from 21 to 25% by weight of the isocyanate component. Preferably, at least 21 wt % of the shell comprises chitosan. The isocyanate component may comprise methylenediphenyl isocyanate and xylylene diisocyanate in a weight ratio of from 1:2 to 1: 1.75. The isocyanate component may comprise by weight 30 to 40% methylenediphenyl isocyanate and from 60 to 70% xylylene diisocyanate.

The shell comprises a polymeric material that is the reaction product of chitosan derived from an aqueous phase, and a cross-linking agent system, derived from an oil phase, comprising an isocyanate component comprising a mixture of two or more di- and/or poly-isocyanates, the di- and/or poly-isocyanates each comprising an aromatic moiety. The isocyanates are diisocyanates, tri-isocyanates or a mixture of di- and tri-isocyanates.

Surprisingly, low leakage can be achieved with careful selection of a mixture of di- and/or poly-isocyanates, comprising at least one alpha-aromatic isocyanate and at least one beta-aromatic isocyanate. Surprisingly, low leakage into carrier material is seen when the weighted %NCO groups of the aromatic isocyanate of the isocyanate component is from 15 to 32% or even from 20 to 26%, or even from 20 to 25% by weight, or even from 21 to 25% by weight. In particular, the compositions of the invention comprise an isocyanate component comprising an alpha- and beta-aromatic isocyanate. The alpha-aromatic isocyanate can be selected from the group consisting of: 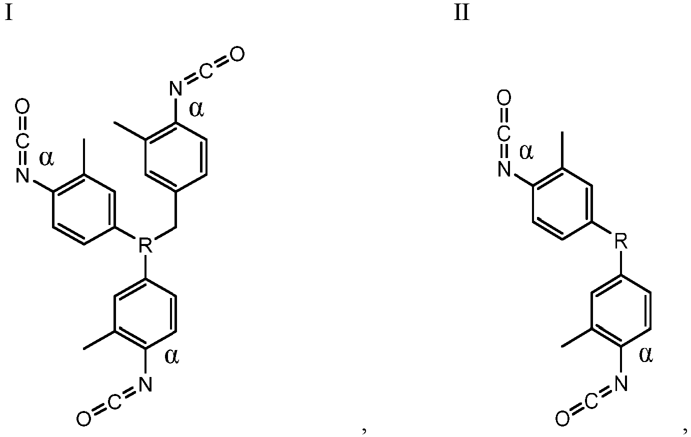 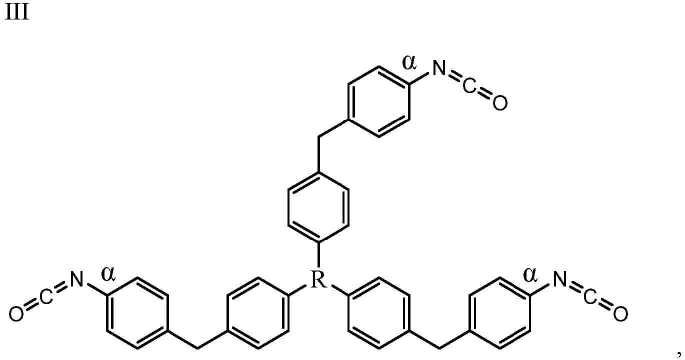 and 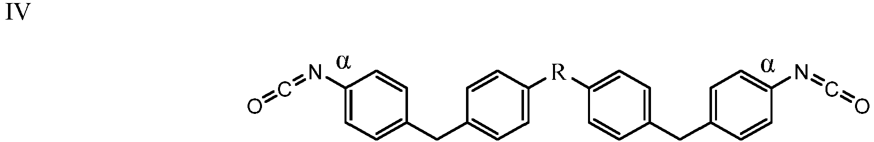 wherein R is a polyol having a pendant urethane group, a polyamine having a urea pendant group, a polyacid with an anhydrate group, a poly-isocyanate comprising a biuret, a poly-isocyanate comprising a uretdione, or a polyisocyanate comprising an isocyanurate.

R bonds to the above structures via at least two reactive moieties comprising for example an amine group, a hydroxy group, an anhydrate and similar groups that can bond into the listed structure.

R in structures I, II, III and IV and XII and XIII for example comprises moieties with at least two or more functional groups that link into the respective di- or tri-isocyanate. R in structures I, II, III and IV and XII and XIII for example can comprise polyol, or a polyol having one or more pendant urethane groups, or a polyamine, such as a polyamine having one or more urea pendant groups or other linking groups, a polyacid with an anhydrate group, a poly-isocyanate comprising a biuret, a poly-isocyanate comprising a uretdione, or a polyisocyanate comprising an isocyanurate. In structures I, II, III and IV and XII and XIII for example the R moieties include at least two or more functional groups that link into the respective di- or tri-isocyanate.

The aromatic isocyanates of formulas I-XVI are based on derivative variations of generally commercially available isocyanates such as xylylene diisocyanate (XDI), toluene diisocyanate (TDI) and methylene diphenyl diisocyanates (MDI).

The above selected aromatic isocyanates are generally available commercially. For example, Covestro in Leverkusen, Germany is a supplier of polyisocyanates and prepolymers under the Desmodur brand. Polyisocyanates conforming to the structures I-XVI disclosed herein are available under the Desmodur E brand of isocyanates and prepolymers, and/or can also be derived synthetically. Optionally aromatic isocyanates are also commercially available from sources such as Mitsui Chemicals, Inc., Tokyo, Japan such as the Takenate brand of isocyanates, e.g., Takenate D-110N adducts based on xylylene diisocyanate.

Specific examples of alpha-aromatic isocyanates useful in the invention can be selected from the group consisting of: 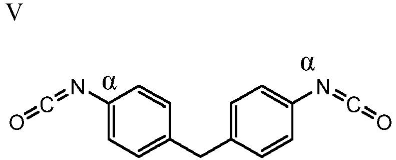 and 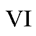 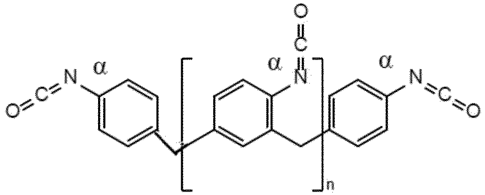 wherein n is an integer from 1 to 24, preferably from 1 to 18, or even from 1 to 12, or even from 1 to 8,

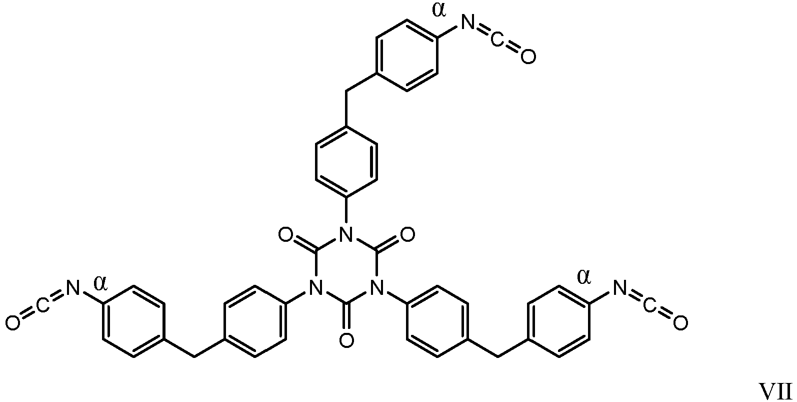

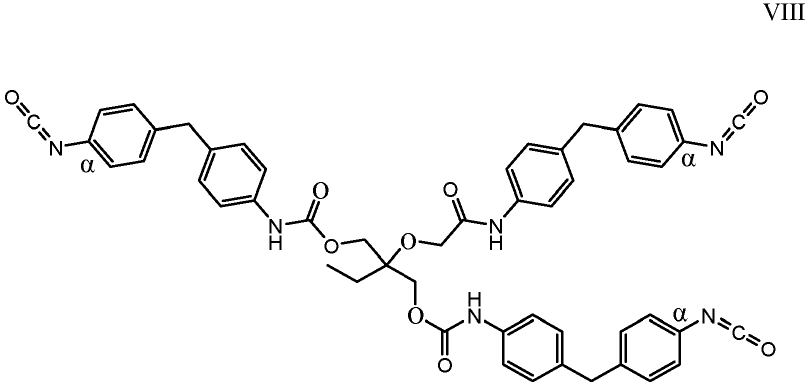

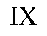

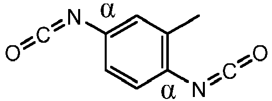

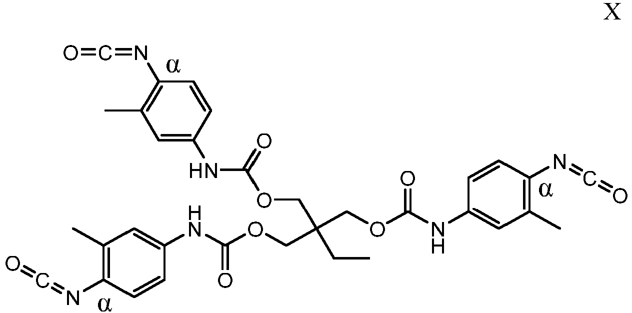

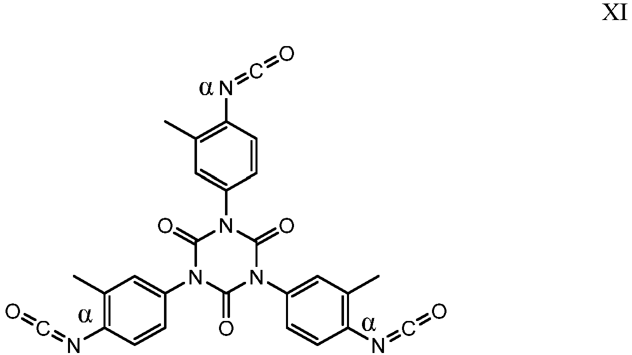

The beta-aromatic isocyanate useful in the invention can be selected from the group consisting of: 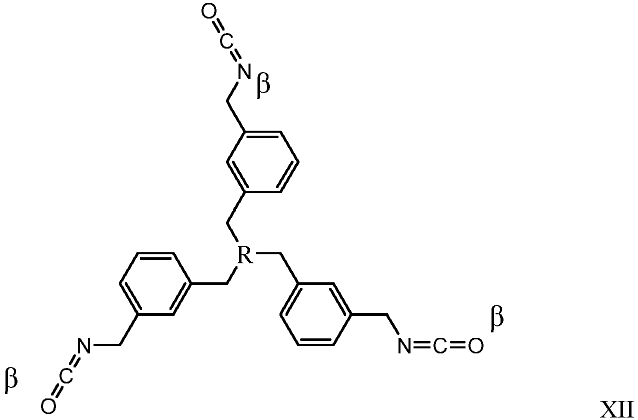 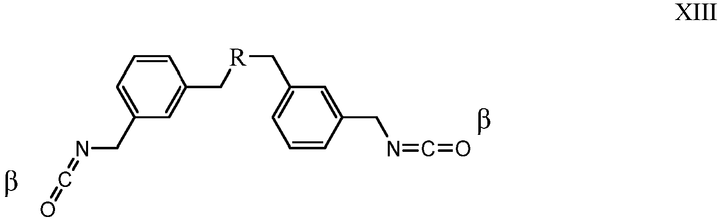 wherein R is a polyol having a pendant urethane group, a polyamine having a urea pendant group, a polyacid with an anhydrate group, a poly-isocyanate comprising a biuret, a poly-isocyanate comprising a uretdione, a polyisocyanate comprising an isocyanurate.

The alpha-aromatic isocyanate can also be selected from the group consisting of toluene diisocyanate, methylene diphenyl diisocyanate, polymeric methylene diphenyl diisocyanate, naphthalene diisocyanate, phenylene diisocyanate, isomers thereof, adducts thereof, and combinations thereof, and preferably selected from methylene diphenyl diisocyanate, polymeric methylene diphenyl diisocyanate, isomers thereof, adducts thereof, and combinations thereof.

Specific examples of beta-aromatic isocyanates useful in the invention can be selected from the group consisting of: 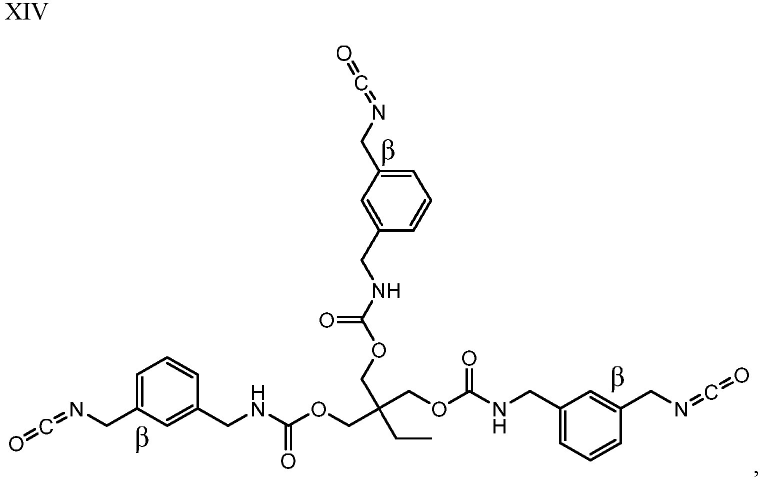 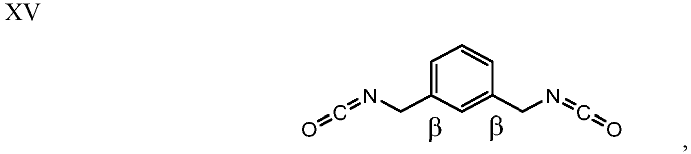 and

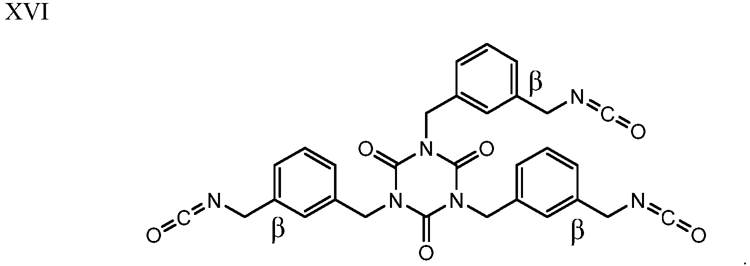

The beta-aromatic isocyanate can also be selected from the group consisting of xylylene diisocyanate, trimethylolpropane adducts of xylylene diisocyanate, tetramethylxylidene diisocyanate, isomers thereof, adducts thereof, and combinations thereof.

The isocyanate component can comprise at least two di- and/or poly-isocyanates selected from methylene diphenyl diisocyanate and xylylene diisocyanate. The xylylene diisocyanate may comprise a trimethylol propane-adduct of xylylene diisocyanate. the methylene diphenyl diisocyanate can be selected from 2,2'-methylenediphenyl diisocyanate and 4,4'-methylenediphenyl diisocyanate. Preferably the isocyanate components are in a weight ratio of from 1:2 to 1: 1.75. Desirably the isocyanate component comprises by weight 30 to 40% of a methylene diphenyl diisocyanate and from 60 to 70% of a xylylene diisocyanate. Usefully, the isocyanate component comprises by weight about 34% methylene diphenyl diisocyanate and about 66% xylylene diisocyanate. Chitosan in combination with the isocyanate component within this isocyanate range or ratio surprisingly is able to efficiently deliver benefit agent at desired touchpoints. Leakage into matrix components and/or carriers is surprisingly reduced as a function of the combination with two isocyanates with the chitosan. The mixture of isocyanates having an aromatic moiety for example can comprise for example trimers of xylylene diisocyanate (XDI) or oligomers or pre-polymers of methylene diphenyl diisocyanate (MDI).

The di- and/or poly- isocyanates comprise an aromatic moiety. The isocyanates employed have two functional groups: an isocyanate group and an aromatic moiety. For ease of reference, the isocyanate molecules can be subdivided into several classifications.

A first grouping can be on the basis of the presence or absence of an aromatic moiety within the whole molecule; hence the following two classification are defined:
1- isocyanate comprising at least one aromatic moiety.
2- isocyanate not comprising any aromatic moiety.

For convenience, the presence of the aromatic moiety can be further classified as either alpha or beta based on carbon-atom naming. Hence the isocyanate comprising an aromatic moiety can be subdivided.
1. i) isocyanate comprising an alpha-aromatic moiety; and,
   1. ii) isocyanate comprising a beta-aromatic moiety.

For ease of reference, Group 1, i) and ii) classifications are then referred to as:
1. i) alpha-aromatic
1. ii) beta-aromatic
and Group 2 as
2. "non-aromatic"

Optionally, prior to shell formation, the chitosan used to make the shells can be treated such with acid, or even a mixture of acids or with a redox initiator preferably persulfate. The redox initiator is selected from any of persulfate or a peroxide. Preferably, the redox initiator is selected from the group consisting of ammonium persulfate, sodium persulfate, potassium persulfate, cesium persulfate, benzoyl peroxide, hydrogen peroxide, and mixtures thereof.

Typically, when chitosan is dissolved in water, for example during the process of making capsules, the resulting mixture tends to be quite viscous. This can result in flowability and processing challenges, and/or inhibit the adequate formation of shells. Acid treatment can result in a decrease of the mixture's viscosity and an improved shell structure. Additionally, it is believed that acid treating the chitosan can beneficially affect the molecular weight of the chitosan, thereby leading to improved shell formation and/or delivery performance.

Without wishing to be bound by theory, it is believed that careful selection of the chitosan and isocyanate combination within the weight ratios of the invention is advantageous in surprisingly achieving a long shelf-life composition containing capsules. For example, selection of an isocyanate component according to the invention results in capsules that perform better at certain touchpoints. It is believed that the combination of isocyanates of the invention yields a higher density capsule. It is believed that the surprising effect of reduced leakage is attributable to not only density of the polymeric material but also related to the presence of aromatic moieties in combination with the reactive sites of the isocyanate component.

Without wishing to be bound by theory, it is believed that careful selection of the chitosan's molecular weight can be advantageous. For example, selection of a chitosan having a molecular weight above a certain threshold can result in capsules that perform better at certain touchpoints compared to particles made from chitosan of a lower molecular weight. Surprisingly treatment with acid can yield a chitosan at a 3.5% concentration, typically having a starting viscosity or approximately 4000 cP, displaying a viscosity reduction of 60% or even exceeding 60%, to a viscosity of 1500 cP, or even 1000 cP at the same concentration as compared to an untreated chitosan.

The chitosan is characterized by preferably a weight average molecular weight of from about 100 to about 800 kDa or even from 100 kDa to about 600 kDa. Preferably, the chitosan is characterized by a weight average molecular weight (Mw) of from about 100 kDa to about 500 kDa, preferably from about 100 kDa to about 400 kDa, more preferably from about 100 kDa to about 300 kDa, even more preferably from about 100 kDa to about 200 kDa. The method used to determine the chitosan's molecular weight and related parameters is provided in the Test Methods section below and uses gel permeation chromatograph with multi-angle light scatter and refractive index detection (GPC-MALS/RI) techniques. Selecting chitosan having the preferred weight average molecular weight can result in capsules having suitable shell formation and/or desirable processibility. For clarity the chitosan weight average molecular weight is measured prior to treatment, such as with acid and/or redox initiator as herein described.

The ratio of the isocyanate component cross-linking agent system to chitosan, based on weight, is preferably 79:21 to 10:90 or even 1:1 to 1:7.

The cross-linking agent system can optionally comprise additional polyisocyanate to the mixture of two or more di- or poly- isocyanates. The additional cross-linking agent can be an aliphatic or aromatic monomer, oligomer or prepolymer, usefully of two or more isocyanate functional groups Additional crosslinking agents of the isocyanate type, for example, can be selected from aromatic toluene diisocyanate and its derivatives used in wall formation for capsules, or aliphatic monomer, oligomer or prepolymer, for example, hexamethylene diisocyanate and dimers or trimers thereof, or 3,3,5-trimethyl-5-isocyanatomethyl-1-isocyanato cyclohexane tetramethylene diisocyanate, polyisocyanurate of toluene diisocyanate, a trimethylol propane adduct of toluene diisocyanate, toluene diisocyanate, tetramethylxylidene diisocyanate, naphthalene-1,5-diisocyanate, phenylene diisocyanate, 1,3-diisocyanato-2-methylbenzene, hydrogenated MDI, bis(4-isocyanatocyclohexyl) methane, dicyclohexylmethane-4,4'-diisocyanate, and oligomers and prepolymers thereof. The additional isocyanates useful in the invention comprise isocyanate monomers, oligomers or prepolymers, or dimers or trimers thereof, having at least two isocyanate groups. Optimal cross-linking can be achieved with isocyanates having at least three functional groups. This listing is illustrative and not intended to be limiting.

Additional crosslinking agents of the isocyanate type can be formed from adducts of polyisocyanates. An adduct is the product of a molecule with itself and/or with another molecule. In the case of adducts of polyisocyanates with themselves, the isocyanate moieties of the polyisocyanate molecule can react with each other, forming a larger polyisocyanate product containing biuret, uretdione, and/or isocyanurate moieties. In the case of polyol adducts of polyisocyanates, the isocyanate moieties of the polyisocyanate molecule can react with the hydroxyl moieties of a polyol, forming a larger polyisocyanate product containing urethane moieties. In the case of polyamine adducts of polyisocyanates, the isocyanate moieties of the polyisocyanate molecule can react with the amine moieties of a polyamine, forming a larger polyisocyanate product containing urea moieties. In the case of polyacid adducts of polyisocyanates, the isocyanate moieties of the polyisocyanate molecule can react with the carboxylic moieties of a polyacid, forming a larger polyisocyanate product containing anhydride moieties. Where a polyisocyanate is a molecule containing 2 or more isocyanate moieties.

Without wishing to be bound by theory, it is believed that the mixed isocyanate system according to the present invention makes the shell less hygroscopic due to the choice of the two specific isocyanates. The shell comprising one of the isocyanates only does not provide the benefit of reduced leakage.

To create the capsules a water phase is prepared, comprising a water solution or dispersion of an amine-containing natural material having free amino moieties. The amine containing natural material is a bio-based material. Such materials for example include chitosan. The amine-containing natural material is dispersed in water. In the case of chitosan, the material, in embodiments, can even be hydrolyzed thereby protonating at least a portion of the amine groups and facilitating dissolving in water. Hydrolysis is carried out with heating for a period at an acidic pH such as about 3 to about 6.5, or even about 5 or 5.5.

The oil phase is prepared by dissolving the isocyanate component in oil at 25 °C. Diluents, for example isopropyl myristate, may be used to adjust the hydrophilicity of the oil phase. The oil phase is then added into the water phase and milled at high speed to obtain a targeted size. The emulsion is then cured in one or more heating steps, such as heating to 40 °C in 30 minutes and holding at 40 °C for 60 minutes. Times and temperatures are approximate.

The temperature and time are selected to be sufficient to form and cure a shell at the interface of the droplets of the oil phase with the water continuous phase. For example, the emulsion is heated to 85 °C in 60 minutes and then held at 85 °C for 360 minutes to cure the capsules. The slurry is then cooled to room temperature.

Volume weighted median particle size of capsules according to the invention can range from 5 microns to 150 microns, or even from 10 to 50 microns, preferably 15 to 50 microns.

The cross-linking agent system of the invention is preferably a mixture or bi- or polyfunctional isocyanates. When referring to useful cross-linking agents reference to polyisocyanate should be understood for purposes hereof as inclusive of isocyanate monomer, isocyanate oligomer, isocyanate prepolymer, or dimer or trimer of an aliphatic or aromatic isocyanate. All such monomers, prepolymers, oligomers, or dimers or trimers of aliphatic or aromatic isocyanates are intended by the term "polyisocyanate" as used herein.

The capsule shell could also be reinforced using additional co-crosslinkers such as multifunctional amines and/or polyamines such as diethylene triamine (DETA), polyethylene imine, and polyvinyl amine.

The shell may also be reinforced using additional co-crosslinkers such as multifunctional amines and/or polyamines, such as diethylene triamine (DETA), polyethylene imine, polyvinyl amine, or mixtures thereof. Acrylates may also be used as additional co-crosslinkers, for example to reinforce the shell.

The polymeric material may be formed in a reaction, where the weight ratio of the chitosan present in the reaction to the cross-linker present in the reaction is from about 1:10 to about 1:0.1. It is believed that selecting desirable ratios of the biopolymer to the cross-linking agent system can provide desired ductility benefits, as well as improved biodegradability. It may be preferred that at least 21 wt % of the shell is comprised of moieties derived from chitosan, preferably from acid-treated chitosan. Chitosan as a percentage by weight of the shell may be from about 21% up to about 95% of the shell. The ratio of chitosan in the water phase as compared to the isocyanate in the oil phase may be, based on weight, from 21:79 to 90:10 or even from 1:1 to 7: 1. The shell may comprise chitosan at a level of 21 wt% or even greater, preferably from about 21 wt% to about 90 wt%, or even from 21 wt % to 85 wt%, or even 21 wt% to 75 wt%, or 21 wt% to 55 wt% of the total shell being chitosan. The chitosan of this paragraph may optionally be acid-treated chitosan or treated with a redox initiator such as persulfate or both.

Chitosan may be added into water in a jacketed reactor and optionally pre-treated with one or both of redox initiator or at a pH from 3 to 6.5, adjusted using an acid (such as one or more of HCl, formic acid or acetic acid). The optional pretreatment step can be accomplished by heating to elevated temperature, such as 85 °C in 60 minutes, and then holding at this temperature from 1 minute to 1440 minutes or longer. The water phase then may be cooled to 25 °C. Optionally, a deacetylating step may be added to further facilitate or enhance depolymerization or deacetylation of the chitosan such as by enzymes. An oil phase is prepared by dissolving a mixture of isocyanates, comprising an aromatic moiety, in oil at 25 °C. Diluents, for example isopropyl myristate, may be used to adjust the hydrophobicity of the oil phase. The oil phase may then be added into the water phase and milled at high speed to obtain a targeted size. The emulsion may then be cured in one or more heating steps, such as heating to 40 °C in 30 minutes and holding at 40 °C for 60 minutes. Times and temperatures are approximate. The temperature and time are selected to be sufficient to form and cure a shell at the interface of the droplets of the oil phase with the water continuous phase. For example, the emulsion may be heated to 85 °C in 60 minutes and then held at 85 °C for 360 minutes to cure the particles. The slurry may then be cooled to room temperature.

The shell may degrade at least 50% after 20 days (or less) when tested according to test method OECD 301B. The shell may degrade at least 60% of its mass after 60 days (or less) when tested according to test method OECD 301B. The shell may preferably degrade at least 60% of its mass after 60 days (or less) when tested according to test method OECD 301B. The shell may degrade from 30-100%, preferably 40-100%, 50-100%, 60-100%, or 60-95%, in 60 days, preferably 50 days, more preferably 40 days, more preferably 28 days, more preferably 14 days.

The capsules (herein also referred to as "delivery particles") may consist of one or more distinct populations. The composition may have at least two different populations of capsules that vary in the exact make-up of the perfume oil and in the median particle size and/or partitioning modifier to perfume oil (PM:PO) weight ratio. The laundry treatment composition may include more than two distinct populations that vary in the exact make up the perfume oil and in their fracture strengths. The populations of capsules can vary with respect to the weight ratio of the partitioning modifier to the perfume oil(s). The laundry treatment composition can include a first population of capsules having a first ratio that is a weight ratio of from 2:3 to 3:2 of the partitioning modifier to a first perfume oil and a second population of capsules having a second ratio that is a weight ratio of less than 2:3 but greater than 0 of the partitioning modifier to a second perfume oil.

Each distinct population of capsules may be prepared in a distinct slurry. For example, the first population of capsules can be contained in a first slurry and the second population of capsules contained in a second slurry. It is to be appreciated that the number of distinct slurries for combination is without limit and a choice of the formulator such that 3, 10, or 15 distinct slurries may be combined. The first and second populations of capsules may vary in the exact makeup of the benefit agent, such as the perfume oil, and in the median particle size and/or PM:PO weight ratio.

The perfume capsules according to the present disclosure may be characterized by a volume-weighted median particle size from about 1 to about 100 microns, preferably from about 10 to about 100 microns, preferably from about 15 to about 50 microns, more preferably from about 20 to about 40 microns, even more preferably from about 20 to about 30 microns.

Different particle sizes are obtainable by controlling droplet size during emulsification. The capsules may be coated with a deposition aid, a cationic polymer, a non-ionic polymer, an anionic polymer, or mixtures thereof. Suitable polymers may be selected from the group consisting of: polyvinylformaldehyde, partially hydroxylated polyvinylformaldehyde, polyvinylamine, polyethyleneimine, ethoxylated polyethyleneimine, polyvinylalcohol, polyacrylates, a polysaccharide (e.g., chitosan), and combinations thereof.

### Core

The core may comprise from about 5% to about 100%, by weight of the core, of a perfume. The core may comprise from about 45% to about 95%, preferably from about 50% to about 80%, more preferably from about 50% to about 70%, by weight of the core, of the perfume.

The perfume may comprise an aldehyde-comprising benefit agent, a ketone-comprising benefit agent, or a combination thereof. Such aldehyde- or ketone-containing perfume raw materials, are known to provide preferred benefits, such as freshness benefits. The perfume may comprise at least about 20%, preferably at least about 25%, more preferably at least about 40%, even more preferably at least about 50%, by weight of the perfume, of aldehyde-containing benefit agents, ketone-containing benefit agents, or combinations thereof.

The term "perfume raw material" (or "PRM") as used herein refers to compounds having a molecular weight of at least about 100 g/mol and which are useful in imparting an odor, fragrance, essence or scent, either alone or with other perfume raw materials. Typical PRMs comprise inter alia alcohols, ketones, aldehydes, esters, ethers, nitrites and alkenes, such as terpene. A listing of common PRMs can be found in various reference sources, for example, "Perfume and Flavor Chemicals", Vols. I and II; Steffen Arctander Allured Pub. Co. (1994) and "Perfumes: Art, Science and Technology", Miller, P. M. and Lamparsky, D., Blackie Academic and Professional (1994).

The PRMs may be characterized by their boiling points (B.P.) measured at the normal pressure (760 mm Hg), and their octanol/water partitioning coefficient (P), which may be described in terms of logP, determined according to the test method below. Based on these characteristics, the PRMs may be categorized as Quadrant I, Quadrant II, Quadrant III, or Quadrant IV perfumes, as described in more detail in U.S. Patent 6,869,923. Suitable Quadrant I, II, III, and IV perfume raw materials are disclosed therein.

Perfume raw materials having a boiling point B.P. lower than about 250 °C and a logP lower than about 3 are known as Quadrant I perfume raw materials. Quadrant I perfume raw materials are preferably limited to less than 30% of the fragrance material.

The perfume may comprise perfume raw materials that have a logP of from about 2.5 to about 4. It is understood that other perfume raw materials may also be present in the fragrance.

The liquid composition may further comprise a free perfume. Without wishing to be bound by theory the presence of free perfume in combination with encapsulated perfume oil may provide a better balance of freshness delivery during the different stages of laundering of fabrics and the during the use of the fabrics.

Preferably the liquid composition has a pH of from 4 to 8, preferably from 6 to 8, as measured in a 10% weight solution in demineralized water at 20°C.

The liquid composition may further comprise a structuring agent to improve suspension of the perfume capsules.

Suitable structuring agents include polyacrylate based polymers, preferably hydrophobically modified polyacrylate polymers; hydroxyl ethyl cellulose, preferably hydrophobically modified hydroxyl ethyl cellulose, xanthan gum, hydrogenated castor oil (HCO), and mixtures thereof.

Preferred hydrophobically modified polyacrylate polymers include water soluble copolymers based on main monomers acrylic acid, acrylic acid esters, vinyl acetate, methacrylic acid, acrylonitrile and mixtures thereof, more preferably the copolymer is based on methacrylic acid and acrylic acid esters having appearance of milky, low viscous dispersion. Most preferred hydrologically modified polyacrylate polymer is Rheovis^{®} AT 120, which is commercially available from BASF.

Other suitable structurants are hydroxyethylcelluloses (HM-HEC) preferably hydrophobically modified hydroxyethylcellulose. Suitable hydroxyethylcelluloses (HM-HEC) are commercially available from Aqualon/Hercules under the product name Polysurf 76^{®} and W301 from 3V Sigma.

Xanthan gum is one suitable structurant used herein. Xanthan gum is a polysaccharide commonly used rheology modifier and stabilizer. Xanthan gum is produced by fermentation of glucose or sucroce by the xanthomonas campestris bacterium. Suitable Xanthan gum is commercially available under trade anem Kelzan T^{®} from CP Kelco.

Suitable hydrogenated castor oil is available under trade name THIXCIN R from Elementis.

Other suitable structurants include Alkali Soluble Emulsion (ASE), or a Hydrophobically Modified Alkali Soluble Emulsion (HASE). ASE and HASE polymers suitable for use herein are described in WO 2024/055047A1.

The liquid composition may further comprise aesthetical dyes and/or pigments, hueing dyes, opacifying agents, and/or mixtures thereof.

Preferably the liquid composition is free or essentially free of anionic surfactant and charged polymers. Without wishing to be bound by theory such ingredients are believed to compromise the leakage prevention impact of the alkoxylated alcohol nonionic surfactants according to the invention.

### Unit-dose article

The present invention also relates to a unit-dose article. The unit-dose article comprises a water-soluble film which encompasses an inner volume enclosed by the water-soluble film. The inner volume houses the liquid composition of the invention.

Multiple compartments, also referred to herein as multi-compartment, unit-dose articles comprise two or more compartments. Preferably, the unit-dose article has at least two compartments, the first compartment housing the composition of the invention (first composition) and the second compartment housing a composition comprising a surfactant and a cleaning adjunct (second composition).

The water-soluble film is sealed such that the composition does not leak out of the compartments during storage. However, upon addition of the water-soluble unit-dose article to water, the water-soluble film dissolves and releases the contents of the internal compartment into water.

Each compartment should be understood as meaning a closed internal space within the unit-dose article, which holds a composition. The unit-dose article is manufactured such that the water-soluble film completely surrounds a composition and in doing so defines the compartment in which the composition resides. The film is described in more detail below.

The unit-dose article can comprise one or more compartments, two or even at least three compartments, or even at least four compartments, in which preferably at least two compartments are present in a superposed position, i.e. one positioned on top of the other. The unit-dose article may further comprise compartments positioned in a side-by-side orientation, i.e. one orientated next to one another, or even be orientated in a 'tyre and rim' arrangement, i.e. a first compartment is positioned next to a second compartment, but the first compartment at least partially surrounds the second compartment, but does not completely enclose the second compartment, or alternatively, one compartment may be completely enclosed within another compartment.

One of the compartments may be smaller than the other compartment. Wherein the unit-dose article comprises at least three compartments, two of the compartments may be smaller than the third compartment, and preferably the smaller compartments are superposed on the larger compartment. Wherein the unit-dose article comprises at least four compartments, three of the compartments may be smaller than the fourth compartment, and preferably the smaller compartments are superposed on the larger compartment. The superposed compartments preferably are orientated side-by-side.

The water-soluble film comprises an inner surface which is in contact with a composition and an outer surface which is oriented away from the composition, towards the outside environment.

Preferably the water-soluble unit-dose article comprises one larger compartment with at least one, preferably at least two, or even at least three smaller compartments superposed thereon. Preferably the first composition is housed in a smaller compartment (first compartment) and the second composition is housed in a larger compartment (second compartment).

The outer contouring seal area includes or preferably consists of a flange area. A flange area is arranged around the perimeter of the unit-dose article, and the flange comprises sealed film from two, three, or more water-soluble films. In other words, the flange area protrudes out from the unit-dose article and comprises sealed film. By 'seal area' we herein mean both the inner seal area as defined as the areas of film sealed together to define the individual compartments without the presence of a flange as well as the outer seal area defining a flange of the water-soluble unit-dose article. Herein the flange excludes the inner seal areas. Preferably, the flange comprises sealed film from at least a first water-soluble film and a second water-soluble film and a third water-soluble film if present. The inner seal area can be created by sealing two water-soluble films together to create physically separated individual compartments or can be created by sealing at least three films together to create physically separated individual compartments. Preferably the inner seal is created by sealing solely two water-soluble films together.

### Water-soluble film

The film of the unit-dose article of the present invention is soluble or dispersible in water. The water-soluble film preferably has a thickness prior to deformation of from 20 to 150 micron, preferably 35 to 125 micron, even more preferably 50 to 110 micron, most preferably about 76 micron.

Preferably, the film has a water-solubility of at least 50%, preferably at least 75% or even at least 95%, as measured by the method set out here after using a glass-filter with a maximum pore size of 20 microns:
5 grams ± 0.1 gram of film material is added in a pre-weighed 3L beaker and 2L * 5ml of distilled water is added. This is stirred vigorously on a magnetic stirrer, Labline model No. 1250 or equivalent and 5 cm magnetic stirrer, set at 600 rpm, for 30 minutes at 30oC. Then, the mixture is filtered through a folded qualitative sintered-glass filter with a pore size as defined above (max. 20 micron). The water is dried off from the collected filtrate by any conventional method, and the weight of the remaining material is determined (which is the dissolved or dispersed fraction). Then, the percentage solubility or dispersability can be calculated. Preferred film materials are preferably polymeric materials. The film material can, for example, be obtained by casting, blow-moulding, extrusion or blown extrusion of the polymeric material, as known in the art.

The water-soluble film comprises polyvinyl alcohol polymer wherein the polyvinyl alcohol polymer comprises a polyvinyl alcohol homopolymer, an anionic polyvinyl alcohol copolymer, or a blend thereof, preferably wherein the anionic polyvinylalcohol copolymers are selected from sulphonated and carboxylated anionic polyvinylalcohol copolymers especially carboxylated anionic polyvinylalcohol copolymers. Most preferably the water-soluble film comprises a blend of polyvinyl alcohol homopolymers, a blend of a polyvinylalcohol homopolymer and a carboxylated anionic polyvinylalcohol copolymer, or alternatively, the polyvinylalcohol consists of an anionic polyvinyl alcohol copolymer, most preferably a carboxylated anionic polyvinylalcohol copolymer. When the polyvinylalcohol in the water-soluble film is a blend of a polyvinylalcohol homopolymer and a carboxylated anionic polyvinylalcohol copolymer, the homopolymer and the anionic copolymer are present in a relative weight ratio of 90/10 to 10/90, preferably 80/20 to 20/80, more preferably 70/30 to 50/50. General classes of anionic monomer units which can be used for the anionic polyvinyl alcohol co-polymer include the vinyl polymerization units corresponding to monocarboxylic acid vinyl monomers, their esters and anhydrides, dicarboxylic monomers having a polymerizable double bond, their esters and anhydrides, vinyl sulfonic acid monomers, and alkali metal salts of any of the foregoing. Examples of suitable anionic monomer units include the vinyl polymerization units corresponding to vinyl anionic monomers including vinyl acetic acid, maleic acid, monoalkyl maleate, dialkyl maleate, monomethyl maleate, dimethyl maleate, maleic anyhydride, fumaric acid, monoalkyl fumarate, dialkyl fumarate, monomethyl fumarate, dimethyl fumarate, fumaric anyhydride, itaconic acid, monomethyl itaconate, dimethyl itaconate, itaconic anhydride, vinyl sulfonic acid, allyl sulfonic acid, ethylene sulfonic acid, 2-acrylamido-1-methylpropanesulfonic acid, 2-acrylamido-2-methylpropanesulfonic acid, 2-methylacrylamido-2-methylpropanesulfonic acid, 2-sufoethyl acrylate, alkali metal salts of the foregoing (e.g., sodium, potassium, or other alkali metal salts), esters of the foregoing (e.g., methyl, ethyl, or other C1-C4 or C6 alkyl esters), and combinations thereof (e.g., multiple types of anionic monomers or equivalent forms of the same anionic monomer). The anionic monomer may be one or more acrylamido methylpropanesulfonic acids (e.g., 2-acrylamido-1-methylpropanesulfonic acid, 2-acrylamido-2-methylpropanesulfonic acid, 2-methylacrylamido-2-methylpropanesulfonic acid), alkali metal salts thereof (e.g., sodium salts), and combinations thereof. Preferably, the anionic moiety of the first anionic monomer unit is selected from a sulphonate, a carboxylate, or a mixture thereof, more preferably a carboxylate, most preferably an acrylate, a methacrylate, a maleate, or a mixture thereof. Preferably, the anionic monomer unit is present in the anionic polyvinyl alcohol copolymer in an average amount in a range of between 1 mol.% and 5 mol.% or between 2 mol.% and 5 mol.%.

The polyvinyl alcohol polymer may be present between 50% and 95%, preferably between 55% and 90%, more preferably between 60% and 80% by weight of the water-soluble film.

Without wishing to be bound by theory, the term "homopolymer" generally includes polymers having a single type of monomeric repeating unit (e.g., a polymeric chain comprising or consisting of a single monomeric repeating unit). For the particular case of polyvinyl alcohol, the term "homopolymer" further includes copolymers having a distribution of vinyl alcohol monomer units and optionally vinyl acetate monomer units, depending on the degree of hydrolysis (e.g., a polymeric chain comprising or consisting of vinyl alcohol and vinyl acetate monomer units). In the case of 100% hydrolysis, a polyvinyl alcohol homopolymer can include only vinyl alcohol units. Without wishing to be bound by theory, the term "copolymer" generally includes polymers having two or more types of monomeric repeating units (e.g., a polymeric chain comprising or consisting of two or more different monomeric repeating units, whether as random copolymers, block copolymers, etc.). For the particular case of polyvinyl alcohol, the term "copolymer" (or "polyvinyl alcohol copolymer") further includes copolymers having a distribution of vinyl alcohol monomer units and vinyl acetate monomer units, depending on the degree of hydrolysis, as well as at least one other type of monomeric repeating unit (e.g., a ter-(or higher) polymeric chain comprising or consisting of vinyl alcohol monomer units, vinyl acetate monomer units, and one or more other monomer units, for example anionic monomer units). In the case of 100% hydrolysis, a polyvinyl alcohol copolymer can include a copolymer having vinyl alcohol units and one or more other monomer units, but no vinyl acetate units.

Without wishing to be bound by theory, the term "anionic copolymer" includes copolymers having an anionic monomer unit comprising an anionic moiety.

Preferably, the polyvinyl alcohol, and/or in case of polyvinyl alcohol blends the individual polyvinyl alcohol polymers and/or the combined polyvinyl alcohol polymers, have an average viscosity (µ1) in a range of between 4 mPa.s and 30 mPa.s, preferably between 10mPa.s and 25 mPa.s, measured as a 4% polyvinyl alcohol polymer solution in demineralized water at 20 degrees C. The viscosity of a polyvinyl alcohol polymer is determined by measuring a freshly made solution using a Brookfield LV type viscometer with UL adapter as described in British Standard EN ISO 15023-2:2006 Annex E Brookfield Test method. It is international practice to state the viscosity of 4% aqueous polyvinyl alcohol solutions at 20 °C. It is well known in the art that the viscosity of an aqueous water-soluble polymer solution (polyvinylalcohol or otherwise) is correlated with the weight-average molecular weight of the same polymer, and often the viscosity is used as a proxy for weight-average molecular weight. Thus, the weight-average molecular weight of the polyvinylalcohol can be in a range of 30,000 to 175,000, or 30,000 to 100,000, or 55,000 to 80,000. Preferably, the polyvinyl alcohol, and/or in case of polyvinylalcohol blends the individual polyvinylalcohol polymers, have an average degree of hydrolysis in a range of between 75% and 99%, preferably between 80% and 95%, most preferably between 85% and 95%. A suitable test method to measure the degree of hydrolysis is as according to standard method JIS K6726.

Preferably, the water-soluble film comprises a non-aqueous plasticizer. Preferably, the non-aqueous plasticizer is selected from polyols, sugar alcohols, and mixtures thereof. Suitable polyols include polyols selected from the group consisting of glycerol, diglycerin, ethylene glycol, diethylene glycol, triethyleneglycol, tetraethylene glycol, polyethylene glycols up to 400 molecular weight, neopentyl glycol, 1,2-propylene glycol, 1,3-propanediol, dipropylene glycol, polypropylene glycol, 2-methyl-1,3-propanediol, trimethylolpropane and polyether polyols, or a mixture thereof. Suitable sugar alcohols include sugar alcohols selected from the group consisting of isomalt, maltitol, sorbitol, xylitol, erythritol, adonitol, dulcitol, pentaerythritol and mannitol, or a mixture thereof. More preferably the non-aqueous plasticizer is selected from glycerol, propylene glycol, dipropylene glycol, 2-methyl-1,3-propanediol, trimethylolpropane, triethyleneglycol, polyethyleneglycol, sorbitol, or a mixture thereof, most preferably selected from glycerol, sorbitol, trimethylolpropane, dipropylene glycol, and mixtures thereof. One particularly suitable plasticizer system includes a blend of glycerol, sorbitol and trimethylol propane. Another particularly suitable plasticizer system includes a blend of glycerin, dipropylene glycol, and sorbitol. Preferably, the film comprises between 5% and 50%, preferably between 10% and 40%, more preferably between 20% and 30% by weight of the film of the non-aqueous plasticizer.

Preferably, the water-soluble film comprises a surfactant. Preferably, the water-soluble film comprises a surfactant in an amount between 0.1% and 2.5%, preferably between 1% and 2% by weight of the water-soluble film. Suitable surfactants can include the nonionic, cationic, anionic and zwitterionic classes. Suitable surfactants include, but are not limited to, polyoxyethylenated polyoxypropylene glycols, alcohol ethoxylates, alkylphenol ethoxylates, tertiary acetylenic glycols and alkanolamides (nonionics), polyoxyethylenated amines, quaternary ammonium salts and quaternized polyoxyethylenated amines (cationics), and amine oxides, N-alkylbetaines and sulfobetaines (zwitterionics). Other suitable surfactants include dioctyl sodium sulfosuccinate, lactylated fatty acid esters of glycerol and propylene glycol, lactylic esters of fatty acids, sodium alkyl sulfates, polysorbate 20, polysorbate 60, polysorbate 65, polysorbate 80, lecithin, acetylated fatty acid esters of glycerol and propylene glycol, and acetylated esters of fatty acids, and combinations thereof.

Preferably the water-soluble film according to the invention comprises lubricants / release agents. Suitable lubricants/release agents can include, but are not limited to, fatty acids and their salts, fatty alcohols, fatty esters, fatty amines, fatty amine acetates and fatty amides. Preferred lubricants/release agents are fatty acids, fatty acid salts, and fatty amine acetates. The amount of lubricant/release agent in the water-soluble film is in a range of from 0.02% to 1.5%, preferably from 0.1% to 1% by weight of the water-soluble film.

Preferably, the water-soluble film comprises fillers, extenders, antiblocking agents, detackifying agents or a mixture thereof. Suitable fillers, extenders, antiblocking agents, detackifying agents or a mixture thereof include, but are not limited to, starches, modified starches, crosslinked polyvinylpyrrolidone, crosslinked cellulose, microcrystalline cellulose, silica, metallic oxides, calcium carbonate, talc and mica. Preferred materials are starches, modified starches and silica. Preferably, the amount of filler, extender, antiblocking agent, detackifying agent or mixture thereof in the water-soluble film is in a range of from 0.1% to 25%, preferably from 1% to 10%, more preferably from 2% to 8%, most preferably from 3% to 5% by weight of the water-soluble film. In the absence of starch, one preferred range for a suitable filler, extender, antiblocking agent, detackifying agent or mixture thereof is from 0.1% to 1%, preferably 4%, more preferably 6%, even more preferably from 1% to 4%, most preferably from 1% to 2.5%, by weight of the water-soluble film.

Preferably the water-soluble film according to the invention has a residual moisture content of at least 4%, more preferably in a range of from 4% to 15%, even more preferably of from 5% to 10% by weight of the water-soluble film as measured by Karl Fischer titration.

Preferred films exhibit good dissolution in cold water, meaning unheated distilled water.

Preferably such films exhibit good dissolution at temperatures of 24°C, even more preferably at 10°C. By good dissolution it is meant that the film exhibits water-solubility of at least 50%, preferably at least 75% or even at least 95%, as measured by the method set out here after using a glass-filter with a maximum pore size of 20 microns, described above.

The film may be opaque, transparent or translucent. Preferably, the film is transparent. The film may comprise a printed area.

The area of print may be achieved using standard techniques, such as flexographic printing or inkjet printing.

The film may comprise an aversive agent, for example a bittering agent. Suitable bittering agents include, but are not limited to, naringin, sucrose octaacetate, quinine hydrochloride, denatonium benzoate, or mixtures thereof. Any suitable level of aversive agent may be used in the film. Suitable levels include, but are not limited to, 1 to 5000ppm, or even 100 to 2500ppm, or even 250 to 2000rpm.

The water-soluble film or water-soluble unit-dose article or both may be further coated in a lubricating agent, preferably, wherein the lubricating agent is selected from talc, zinc oxide, silicas, siloxanes, zeolites, silicic acid, alumina, sodium sulphate, potassium sulphate, calcium carbonate, magnesium carbonate, sodium citrate, sodium tripolyphosphate, potassium citrate, potassium tripolyphosphate, calcium stearate, zinc stearate, magnesium stearate, starch, modified starches, clay, kaolin, gypsum, cyclodextrins or mixtures thereof.

### Second composition

The second composition is preferably a liquid composition. The composition is preferably part of a detergent composition. More preferably part of an automatic dishwashing or laundry detergent composition. More preferably part of a liquid laundry detergent composition. The term 'liquid laundry detergent composition' refers to any laundry detergent composition comprising a liquid capable of wetting and treating a fabric, and includes, but is not limited to, liquids, gels, pastes, dispersions and the like. The liquid composition can include solids or gases in suitably subdivided form, but the liquid composition excludes forms which are non-fluid overall, such as tablets or granules.

The laundry detergent composition can be used in a fabric hand wash operation or may be used in an automatic machine fabric wash operation.

Preferably, the second composition comprises a non-soap surfactant. The non-soap surfactant is preferably selected from non-soap anionic surfactant, non-ionic surfactant or a mixture thereof. Preferably, the laundry detergent composition comprises between 10% and 60%, more preferably between 20% and 55% by weight of the laundry detergent composition of the non-soap surfactant. Example weight ratio of non-soap anionic surfactant to nonionic surfactant are from 1:1 to 20:1, from 1.25:1 to 17.5:1, from 1.5:1 to 15:1, or from 1.75:1 to 13:1.

Preferably, the anionic non-soap surfactant comprises linear alkylbenzene sulphonate, alkyl sulphate, alkoxylated alkyl sulphate or a mixture thereof. Preferably, the alkoxylated alkyl sulphate is an ethoxylated alkyl sulphate.

Preferably, the second composition comprises between 5% and 60%, preferably between 15% and 55%, more preferably between 25% and 50%, most preferably between 30% and 45% by weight of the composition of the non-soap anionic surfactant.

Preferably, the non-soap anionic surfactant comprises linear alkylbenzene sulphonate and alkoxylated alkyl sulphate, wherein the ratio of linear alkylbenzene sulphonate to alkoxylated alkyl sulphate preferably the weight ratio of linear alkylbenzene sulphonate to ethoxylated alkyl sulphate is from 1:2 to 9:1, preferably from 1:1 to 7:1, more preferably from 1:1 to 5:1, even more preferably from 1:1 to 4:1. Alternatively the non-soap anionic surfactant can consist of linear alkylbenzene sulphonate. Alternatively the non-soap anionic surfactant can comprise unalkoxylated alkyl sulphate and linear alkylbenzene sulphonate. The alkoxylated or unalkoxylated alkyl sulphate can be derived from a synthetic alcohol or a natural alcohol, or from a blend thereof, pending the desired average alkyl carbon chain length and average degree of branching.

Preferably, the synthetic alcohol is made following the Ziegler process, OXO-process, modified OXO-process, the Fischer Tropsch process, Guerbet process or a mixture thereof. Preferably, the naturally derived alcohol is derived from natural oils, preferably coconut oil, palm kernel oil or a mixture thereof.

Preferably, the laundry detergent composition comprises between 1% and 30%, preferably between 2% and 25%, most preferably between 3% and 20% by weight of the laundry detergent composition of a non-ionic surfactant. The non-ionic surfactant is preferably selected from alcohol alkoxylate, Ziegler-synthesized alcohol alkoxylate, an oxo-synthesized alcohol alkoxylate, Guerbet alcohol alkoxylates, alkyl phenol alcohol alkoxylates or a mixture thereof.

Preferably, the second composition comprises between 1.5% and 20%, more preferably between 2% and 15%, even more preferably between 3% and 10%, most preferably between 4% and 8% by weight of the composition of soap, preferably a fatty acid salt, more preferably an amine neutralized fatty acid salt, wherein preferably the amine is an alkanolamine more preferably selected from monoethanolamine, diethanolamine, triethanolamine or a mixture thereof, more preferably monoethanolamine.

Preferably, the second composition comprises a non-aqueous solvent, preferably wherein the non-aqueous solvent is selected from propylene glycol, dipropylene glycol, tripropyleneglycol, glycerol, sorbitol, polyethyleneglyceol, polypropylene glycol, or a mixture thereof, preferably wherein the polypropyleneglycol has a molecular weight of 400. Preferably the second composition comprises between 10% and 40%, preferably between 15% and 30% by weight of the composition of the non-aqueous solvent. Without wishing to be bound by theory the non-aqueous solvents ensure appropriate levels of film plasticization so the film is not too brittle and not too 'floppy'. Without wishing to be bound by theory, having the correct degree of plasticization will also facilitate film dissolution when exposed to water during the wash process.

Preferably, the second composition comprises between 0.5% and 15%, preferably between 5% and 13% by weight of the composition of water.

Preferably, the second composition comprises an ingredient selected from the list comprising cationic polymers, polyester terephthalates, amphiphilic graft co-polymers, carboxymethylcellulose, enzymes, perfumes, encapsulated perfumes, bleach or a mixture thereof.

The laundry detergent composition may comprise an adjunct ingredient, wherein the adjunct ingredient is selected from ethanol, hueing dyes, aesthetic dyes, enzymes, builders preferably citric acid, chelants, cleaning polymers, dispersants, dye transfer inhibitor polymers, fluorescent whitening agent, opacifier, antifoam, preservatives, anti-oxidants, or a mixture thereof. Preferably the chelant is selected from aminocarboxylate chelants, aminophosphonate chelants, or a mixture thereof.

Preferably, second composition has a pH between 6 and 10, more preferably between 6.5 and 8.9, most preferably between 7 and 8, wherein the pH of the laundry detergent composition is measured as a 10% by weight solution in demineralized water at 20°C. The second composition may be Newtonian or non-Newtonian. Preferably, the second composition is non-Newtonian. Without wishing to be bound by theory, a non-Newtonian liquid has properties that differ from those of a Newtonian liquid, more specifically, the viscosity of non-Newtonian liquids is dependent on shear rate, while a Newtonian liquid has a constant viscosity independent of the applied shear rate. The decreased viscosity upon shear application for non-Newtonian liquids is thought to further facilitate dissolution. The second composition described herein can have any suitable viscosity depending on factors such as formulated ingredients and purpose of the composition. When Newtonian the composition may have a viscosity value, at a shear rate of 20s-1 and a temperature of 20°C, of 100 to 3,000 cP, alternatively 200 to 2,000 cP, alternatively 300 to 1,000 cP, following the method described herein. When non-Newtonian, the composition may have a high shear viscosity value, at a shear rate of 20s-1 and a temperature of 20°C, of 100 to 3,000 cP, alternatively 300 to 2,000 cP, alternatively 500 to 1,000 cP, and a low shear viscosity value, at a shear rate of 1 s-1 and a temperature of 20°C, of 500 to 100,000 cP, alternatively 1000 to 10,000 cP, alternatively 1,300 to 5,000 cP, following the method described herein. Methods to measure viscosity are known in the art. According to the present disclosure, viscosity measurements are carried out using a rotational rheometer e.g. TA instruments AR550. The instrument includes a 40mm 2° or 1 ° cone fixture with a gap of around 50-60µ 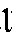 η for isotropic liquids, or a 40mm flat steel plate with a gap of 1000 µ 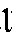 η for particles containing liquids. The measurement is carried out using a flow procedure that contains a conditioning step, a peak hold and a continuous ramp step. The conditioning step involves the setting of the measurement temperature at 20°C, a pre-shear of 10 seconds at a shear rate of 10s⁻¹, and an equilibration of 60 seconds at the selected temperature.

The peak hold involves applying a shear rate of 0.05s⁻¹ at 20°C for 3min with sampling every 10s. The continuous ramp step is performed at a shear rate from 0.1 to 1200s⁻¹ for 3min at 20°C to obtain the full flow profile.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

### EXAMPLES

### Example 1

Liquid compositions according to the invention (Ex. 1 and Ex. 2) were made and its physical stability was visually assessed after 24 hours and found stable. A liquid composition differing only in the type of perfume capsule (Ex. A) was found unstable.

Samples were prepared by mixing the different ingredients as tabulated in Table 1.

**Table 1:**

| Wt% 100% active basis | Ex. A | Ex. 1 | Ex. 2 |
|---|---|---|---|
| Ethoxylated glycerol¹ | 50 | 50 | 50 |
| Ethoxylated fatty alcohol² | 25 | 25 | 25 |
| Water | 11.3 | 11.9 | 11.4 |
| Melamine-formaldehyde perfume capsules³ | 5.7 | | |
| Chitosan-based perfume capsules with double crosslinker⁴ | | 5.8 | |
| Chitosan-based perfume capsules with single crosslinker⁵ | | | 5.7 |
| Glycerol | Balance | Balance | Balance |
| pH | 6 | 6 | 6 |
| Physical stability after 24hr. | Flocculated | Stable | Stable |

| | | | |
|---|---|---|---|
| ¹Ethoxylated glycerol with an average degree of ethoxylation of 15, available from Sasol under the tradename Glicerodac-15. ²Secondary alcohol ethoxylate with average degree of ethoxylation of 9, available from Dow under the tradename Tergitol^{™} 15-s-9. ³core-shell melamine formaldehyde capsules wherein the core consists of perfume oil. ⁴core-shell capsules wherein the shell comprises a polymeric material that is the reaction product of chitosan and two cross-linking agents Beta-aromatic Isocyanate and Alpha-aromatic Isocyanate; and wherein the core comprises perfume oil and isopropyl myristate. The level of perfume oil and isopropyl myristate is 71% and 18% by weight of the capsules, respectively. ⁵ core-shell capsules wherein the shell comprises a polymeric material that is the reaction product of chitosan and a single cross-linking agent Beta-aromatic Isocyanate; and wherein the core comprises perfume oil and isopropyl myristate. The level of perfume oil and isopropyl myristate is 70% and 17% by weight of the capsules, respectively. | | | |

### Preparation of chitosan-based perfume capsules with single crosslinker

A chitosan stock solution was prepared by dispersing 121.50 g chitosan ChitoClear^{®} into 2578.5g deionized water while mixing in a jacketed reactor. The pH of the chitosan dispersion was then adjusted to 5.28 using concentrated HCl under agitation. The temperature of the chitosan solution is then increased to 85°C over 60 minutes and then held at 85°C to hydrolyze the ChitoClear^{®}. The temperature was then reduced to 25°C after the hydrolyzing step over a period of 90 minutes. The pH of the hydrolyzed chitosan solution was 5.36. Next, a water phase was prepared by mixing 362.36 g of the hydrolysed chitosan stock solution in a jacketed reactor.

An oil phase was prepared by mixing 124.64g perfume and 31.16g isopropyl myristate together along with 3.40 g Takenate D-110N (Mitsui Chemicals America, Inc., Rye Brook, NY) at room temperature. The oil phase was added to the water phase under high shear milling to obtain an emulsion. The emulsion was heated to 40°C over 30 minutes and held for 60 minutes.

The emulsion was then heated to 85 °C for 6 hours while mixing to form polymer-based perfume capsules. The resulting slurry of dispersed polymer-based perfume capsules was cooled to room temperature.

### Preparation of chitosan-based perfume capsules with double crosslinker

An acid and potassium persulfate treated chitosan solution was prepared by dispersing 146.0 g chitosan ChitoClear^{®} into 3100 g water while mixing in a jacketed reactor at 60°C.

Potassium persulfate ("KPS") was then added to the chitosan dispersion under mixing, at a level such that after the hydrolyzing and depolymerize step, the chitosan solution viscosity was between 50cP-2000cP. The pH of the chitosan dispersion was adjusted to 5.9 using a concentrated HCl solution. The temperature of the chitosan solution was increased to 85°C during 60 minutes and then held at 85°C for a period of time to hydrolyze and depolymerize the chitosan. The temperature was reduced to 25°C after the hydrolyzing step during 90 minutes to obtain the acid and potassium persulfate treated chitosan solution.

A water phase was prepared by mixing 354.0 g of the acid and potassium persulfate treated chitosan solution along with 82.6g demineralized water in a jacketed reactor. An oil phase was prepared by mixing 105 g perfume and 26.2 g isopropyl myristate at room temperature, along with two crosslinkers: Takenate D-110N (Mitsui Chemicals America, Inc., Rye Brook, NY) and Mondur MR-Light (Covestro LLC Pittsburgh, PA). The Takenate D-110N was added to the oil phase in an amount of 2.62 g, and the Mondur MR-Light was added in an amount of 1.01 g. The oil phase was added to the water phase under high shear milling to obtain an emulsion with desired particle size. The emulsion was heated to 60°C during 45 minutes and then heated to 85°C in 60 minutes and maintained at this temperature for 6 hours while mixing before cooling down to 25°C in 90 minutes.

### Preparation of melamine formaldehyde-based perfume capsules

Suitable perfume capsules can be purchased from Encapsys (825 East Wisconsin Ave, Appleton, WI 54911), and are made as follows: 25 grams of butyl acrylate-acrylic acid copolymer emulsifier (Colloid C351, 25% solids, pka 4.5-4.7, (Kemira Chemicals, Inc. Kennesaw, Georgia U.S.A.)) is dissolved and mixed in 200 grams deionized water. The pH of the solution is adjusted to pH of 4.0 with sodium hydroxide solution. 8 grams of partially methylated methylol melamine resin (Cymel 385, 80% solids, (Cytec Industries West Paterson, New Jersey, U.S.A.)) is added to the emulsifier solution. 200 grams of perfume oil is added to the previous mixture under mechanical agitation and the temperature is raised to 50°C. After mixing at higher speed until a stable emulsion is obtained, the second solution and 4 grams of sodium sulfate salt are added to the emulsion. This second solution contains 7 grams of butyl acrylate-acrylic acid copolymer emulsifier (Colloid C121, 25% solids, Kemira), 120 grams of distilled water, sodium hydroxide solution to adjust pH to 4.8, 25 grams of partially methylated methylol melamine resin (Cymel 385, 80% solids, Cytec). This mixture is heated to 85°C and maintained overnight with continuous stirring to complete the encapsulation process. 23 grams of acetoacetoamide (Sigma-Aldrich, Saint Louis, Mo USA), 90 grams of a 1% aqueous solution of Optixan Xanthan Gum (ADM Corporation), and 35 grams of 32 wt% magnesium chloride solution (Chemical Ventures) are added. A volume-mean particle size of 18 microns is obtained. Then perfume capsules are coated with a polyvinylformamide deposition aid as follows: 0.6 grams of a cationic modified co-polymer of polyvinylamine and N-vinyl formamide (BASF Corp) are added and mixed overnight.

### Example 2

Liquid compositions according to the invention (Ex. 3 and Ex. 4) were made and its physical stability was visually assessed after 24 hours and found stable. Liquid compositions (Ex. B and Ex. C) differing from composition Ex. 3 only in the type of perfume capsule were found unstable.

**Table 2:**

| Wt% 100% active basis | Ex. B | Ex. C | Ex. 3 | Ex. 4 |
|---|---|---|---|---|
| Polyproplyne glycol Mw 400 | 80 | 80 | 80 | 77% |
| Melamine-formaldehyde perfume capsules³ | 8.2 | | | |
| Polyacrylate perfume capsules⁶ | | 8.8 | | |
| Chitosan-based perfume capsules with double crosslinker⁴ | | | 7.5 | 8.9 |
| water | 11.8 | 11.2 | 12.5 | 14.1 |
| Physical stability after 24hr. | Flocculated | Flocculated | Stable | Stable |

| | | | | |
|---|---|---|---|---|
| ⁶core-shell polyacrylate capsules wherein the cores comprises perfume oil and isopropyl myristate. The level of perfume oil and isopropyl myristate is 54% and 44% by weight of the capsules, respectively. | | | | |

### Preparation of polyacrylate-based perfume capsules

Suitable perfume capsules can be purchased from Encapsys, (825 East Wisconsin Aye, Appleton, WI 54911), and are made as follows: a first oil phase, consisting of 37.5 g perfume, 0.2 g tert-butyl amino ethyl methoacrylate, and 0.2 g beta hydroxyethyl acrylate is mixed for about 1 hour before the addition of 18 g CN975 (Sartomer, Exter, PA). The solution is allowed to mix until needed later in the process. A second oil phase consisting of 65 g of the perfume oil, 84 g isopropyl myristate, 1 g 2,2' -azobis(2- methylbutyronitrile), and 0.8 g 4,4' -azobis4-cyanovaleric acid is added to a jacketed steel reactor. The reactor is held at 35°C and the oil solution in mixed at 500 rpm with a 2" flat blade mixer. A nitrogen blanket is applied to the reactor at a rate of 300cc/mm. The solution is heated to 70°C in 45 minutes and held at 70°C for 45 minutes, before cooling to 50°C in 75 minutes. At 50°C, the first oil phase is added and the combined oils are mixed for 30 another 10 minutes at 50°C.

### Example 3

An unit-dose article comprising a water-soluble film can be made by making a first compartment containing one of the compositions according to the invention exemplified in Example 1 or Example 2 (Compositions 1 to 4) and a second compartment, wherein the second compartment contain a second composition as illustrated in the table below (Wash composition A or B). The unit-dose article can be a pouch with superposed compartments. The first compartment superposed onto the second compartment. The water-soluble film is made of polyvinyl alcohol.

| ***Ingredients - Wt% (100% active basis)*** | ***Wash composition A*** | ***Wash composition B*** |
|---|---|---|
| Fatty alcohol ethoxylate non-ionic surfactant, C₁₂₋₁₄ average degree of ethoxylation of 7 | 8.1 | 3.8 |
| Lutensol XL100 | 0.4 | 0.5 |
| Linear C₁₁₋₁₄ alkylbenzene sulphonate | 24.1 | 24.6 |
| C12-14 AE3S Ethoxylated alkyl sulphate with an average degree of ethoxylation of 3 | 9.6 | 12.5 |
| Citric acid | 0.6 | 0.7 |
| Palm Kernel Fatty acid | 4.4 | 5.3 |
| Nuclease enzyme¹ (wt% active protein) | 0.01 | 0.01 |
| Protease enzyme (wt% active protein) | 0.09 | 0.07 |
| Amylase enzyme (wt% active protein) | 0.01 | 0.01 |
| Xyloglucanase enzyme (wt% active protein) | 0.01 | 0.01 |
| Mannanase enzyme (wt% active protein) | 0.01 | 0.01 |
| Ethoxylated polyethyleneimine² | 1.7 | 1.6 |
| Amphiphilic graft copolymer³ | 1.7 | 2.6 |
| Zwitterionic polyamine⁴ | 1.9 | 1.8 |
| Nonionic Polyester Terepthalate⁵ | 0.4 | - |
| Anionic Polyester Terephtalate⁶ | - | 0.6 |
| HEDP chelant | 2.1 | - |
| GLDA chelant | - | 2.2 |
| EGDS opacifying agent⁷ | 0.2 | 0.1 |
| Brightener 49 | 0.3 | 0.4 |
| Silicone anti-foam | 0.1 | 0.3 |
| Hueing dye | 0.1 | 0.1 |
| 1,2 PropaneDiol | 12.9 | 12.3 |
| Glycerine | 4.6 | 4.7 |
| DPG (DiPropyleneGlycol) | 0.1 | 1.7 |
| TPG (TriPropyleneGlycol) | 0.1 | 0.1 |
| Sorbitol | 0.4 | 0.1 |
| Monoethanolamine | 9.4 | 10.2 |
| K2SO3 | 0.3 | 0.4 |
| MgCl2 | 0.3 | 0.3 |
| water | 11.5 | 10.8 |
| Hydrogenated castor oil | 0.1 | 0.1 |
| Perfume | 3.7 | 2.1 |
| Aesthetic dye & Minors | Balance to 100 | Balance to 100 |
| pH (10% product concentration in demineralized water at 20°C) | 7.4 | 7.4 |

| | | |
|---|---|---|
| ¹Nuclease enzyme is as claimed in co-pending European application 19219568.3 ²Lutensol FP620 (ethoxylated polyethyleneimine polymer ex BASF (PEI600 EO20) ³ amphiphilic graft polymer (polyethylene glycol graft polymer comprising a polyethylene glycol backbone (Pluriol E6000) and hydrophobic vinyl acetate side chains, comprising 40% by weight of the polymer system of a polyethylene glycol backbone polymer and 60% by weight of the polymer system of the grafted vinyl acetate side chain). ⁴Lutensit Z96 (zwitterionic hexamethylene diamine ex BASF, 100% quaternized and about 40% of the polyethoxy (EO24) groups are sulfonated), preferably having a structure below). 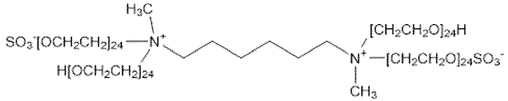 ⁵Texcare SRN260 ex Clariant ⁶Texcare SRA300 ex Clariant ⁷Ethylene glycol distearate (Plantasens OP95 ex Clariant) | | |

## Claims

1. A liquid composition comprising:
i) from 5% to 90% by weight of the composition of a nonionic material selected from the group consisting of non-ionic surfactants, non-aqueous organic solvents, and a mixture thereof;
ii) from 1% to 50% by weight of the composition of perfume capsules, wherein the capsules have a core and a shell and wherein the shell surrounds the core;
wherein the core comprises a perfume,
wherein the shell comprises a polymeric material that is the reaction product of chitosan and a cross-linking agent system,
iii) up to 25% by weight of the composition of water; and
iv) less than 5% by weight of the composition of anionic surfactant.

2. A liquid composition according to claim 1 wherein the non-ionic surfactant comprises an alcohol alkoxylated nonionic surfactant selected from the group consisting of linear alcohol alkoxylated nonionic surfactant, branched alkoxylated primary alcohol nonionic surfactant, alkoxylated secondary alcohol nonionic surfactant, ethylene oxide - propylene oxide triblock copolymer, and a mixture thereof.

3. A liquid composition according to claim 2 wherein the alcohol alkoxylated nonionic surfactant comprises an alkoxylated secondary alcohol nonionic surfactant comprising an ethoxylated secondary alcohol nonionic surfactant having a total average alkyl chain length of from 5 to 20, preferably from 11 to 15 carbon atoms, and an average number of ethoxy units from 3 to 40, preferably from 3 to 9, more preferably the ethoxylated secondary alcohol has a total average alkyl chain length of from 11 to 15 carbon atoms and on average from 3 to 9 ethoxy units.

4. A liquid composition according to claims 2 or 3 wherein the alcohol alkoxylated nonionic surfactant comprises a branched alkoxylated primary alcohol nonionic surfactant comprising a branched alkoxylated C6-C16 primary alcohol nonionic surfactant derived from an alcohol selected from the group consisting of methyl hexanol, ethyl hexanol, propyl hexanol, dimethyl hexanol, trimethyl hexanol, methyl heptanol, ethyl heptanol, propyl heptanol, dimethyl heptanol, trimethyl heptanol, methyl octanol, ethyl octanol, propyl octanol, butyl octanol, dimethyl octanol, trimethyl octanol, methyl nonanol, ethyl nonanol, propyl nonanol, butyl nonanol, dimethyl nonanol, trimethyl nonanol, methyl decanol, ethyl decanol, propyl decanol, butyl decanol, dimethyl decanol, trimethyl decanol, methyl undecanol, ethyl undecanol, propyl undecanol, butyl undecanol, dimethyl undecanol, trimethyl undecanol, methyl dodecanol, ethyl dodecanol, propyl dodecanol, butyl dodecanol, dimethyl dodecanol, trimethyl dodecanol, and mixtures thereof, and wherein the branched alkoxylated C6-C16 primary alcohol has on average from 1 to 30, preferably from 2 to 15, more preferably from 3 to 12 even more preferably from 4 to 9 ethoxylate units, and optionally from 1 to 9, preferably from 2 to 7, more preferably from 3 to 6 of propoxylate units.

5. A liquid composition according to the preceding claim wherein the branched alkoxylated primary alcohol nonionic surfactant comprises an alkoxylated guerbet alcohol nonionic surfactant selected from the group consisting of alkoxylated C8 guerbet alcohol nonionic surfactant, alkoxylated C10 guerbet alcohol nonionic surfactant; alkoxylated C12 guerbet alcohol nonionic surfactant, and a mixture thereof, with on average from 1 to 14 alkoxylate units, preferably an ethoxylated C8, C10 and/or C12 guerbet alcohol nonionic surfactant with an average degree of ethoxylation of from 5 to 11, preferably from 6 to 9.

6. A liquid composition according to any of claims 2 to 5 wherein the alcohol alkoxylated nonionic surfactant comprises a linear alcohol alkoxylated nonionic surfactant comprising a C₈ to C₁₈, preferably a C₈ to C₁₆, more preferably a C₁₀ to C₁₄, most preferably a C₁₂ to C₁₄ linear alkyl chain, and preferably comprises from 1 to 30, preferably from 3 to 15, more preferably from 5 to 12, even more preferably from 6 to 10 ethoxylate units.

7. A liquid composition according to any of claims 2 to 6 wherein the alcohol alkoxylated nonionic surfactant comprises an ethylene oxide - propylene oxide triblock copolymer having one of the following structures:
a) an ethylene oxide-propylene oxide-ethylene oxide (EO/PO/EO) triblock copolymer, wherein the copolymer comprises a first EO block, a second EO block and PO block and wherein the first EO block and the second EO block are linked to the PO block; or
b) a propylene oxide-ethylene oxide-propylene oxide (PO/EO/PO) triblock copolymer, wherein the copolymer comprises a first PO block, a second PO block and EO block and wherein the first PO block and the second PO block are linked to the EO block.

8. A liquid composition according to any of the preceding claims wherein the composition comprises a non-aqueous organic solvent selected from the group consisting of:
i) glycerol;
ii) polyethylene glycol preferably having a number average molecular weight of from 200 Da to 1000 Da;
iii) polyglycerol, alkoxylated polyol, alkoxylated polyol ester, and a mixture thereof, wherein the polyol has from 3 to 5 hydroxyl groups; and/or
iv) polypropylene glycol having a number average molecular weight of from 700 Da to 5000 Da.

9. A liquid composition according to any of the preceding claims wherein the cross-linking agent system comprises an isocyanate component.

10. A liquid composition according to the preceding claims wherein the isocyanate component comprises a mixture of two or more di- and/or poly-isocyanates, the di- and/or poly-isocyanates each comprising an aromatic moiety; and
wherein the mixture of di- and/or poly-isocyanates comprising an aromatic moiety comprises at least one alpha-aromatic isocyanate and at least one beta-aromatic isocyanate.

11. A liquid composition according to any of the preceding claims wherein the composition comprises less than 3%, preferably less than 1% by weight of the composition of anionic surfactant and more preferably the composition is substantially free or free of anionic surfactant.

12. A liquid composition according to any of the preceding claims wherein the composition has a pH of from 4 to 8 as measured in a 10% weight solution in demineralized water at 20°C.

13. A unit-dose article comprising a water-soluble film creating a first compartment and a second compartment, wherein the first compartment comprises a first liquid composition according to any of the preceding claims and wherein the second compartment comprises a second composition comprising a surfactant and a cleaning adjunct.

14. The unit-dose article according to the preceding claim wherein the first liquid composition is substantially free of enzymes.

15. The unit-dose article according to any of claims 13 or 14 wherein the surfactant of the second composition comprises an anionic surfactant and a non-ionic surfactant.

16. The unit-dose article according to any of claims 13 to 15 wherein the cleaning adjunct of the second composition is selected from the group consisting of: enzymes, antiredeposition agents, neutralizers, optical brighteners, foam inhibitors, chelators, bittering agents, dye transfer inhibitors, soil release agents, water softeners, electrolytes, pH regulators, anti-graying agents, anti-crease components, colorants, scents, processing aids, and mixtures thereof.

17. The unit-dose article according to the preceding claim wherein the cleaning adjunct of the second composition comprises an enzyme preferably selected from the group consisting of proteases, amylases, cellulases, lipases, xyloglucanases, mannanases, nucleases, pectate lyases, and a mixture thereof.

18. The unit-dose article according to any of claims 13 to 17 wherein the second composition is a liquid composition.

19. The unit-dose article according to any of claims 13 to 18 wherein the second composition comprises an organic solvent selected from the group consisting of: 1,2-propanediol, dipropylene glycol, tripropyleneglycol, glycerol, sorbitol, polyethylene glycol, and a mixture thereof.

20. The unit-dose article according to any of claims 13 to 19 wherein the first and/or second composition comprises a free perfume.

21. The unit-dose article according to any of claims 13 to 20 wherein the film comprises polyvinylalcohol.

22. A method of laundering a fabric comprising the step of contacting the fabric with an aqueous solution comprising the composition of any of claims 1 to 12 or the unit-dose article according to any of claims 13 to 21.
